(19) Europäisches Patentamt
European Patent Office
Office européen des brevets

(11) **EP 3 743 661 B1**

(12) **EUROPÄISCHE PATENTSCHRIFT**

(45) Veröffentlichungstag und Bekanntmachung des Hinweises auf die Patenterteilung:
**06.04.2022   Patentblatt 2022/14**

(21) Anmeldenummer: **19700489.8**

(22) Anmeldetag: **11.01.2019**

(51) Internationale Patentklassifikation (IPC):
**F24S 40/50** *(2018.01)*        **F24S 70/225** *(2018.01)*

(52) Gemeinsame Patentklassifikation (CPC):
**F24S 70/225; A46B 5/02; F24S 40/50; F24S 70/30; G02B 5/22;** A46B 2200/1046; Y02E 10/40

(86) Internationale Anmeldenummer:
**PCT/EP2019/050676**

(87) Internationale Veröffentlichungsnummer:
**WO 2019/145166 (01.08.2019 Gazette 2019/31)**

(54) **VERBUNDMATERIAL FÜR EINEN SOLARKOLLEKTOR**

COMPOSITE MATERIAL FOR A SOLAR COLLECTOR

MATÉRIAU COMPOSITE POUR COLLECTEUR SOLAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2018   DE 102018101770**

(43) Veröffentlichungstag der Anmeldung:
**02.12.2020   Patentblatt 2020/49**

(73) Patentinhaber: **ALANOD GmbH & Co. KG 58256 Ennepetal (DE)**

(72) Erfinder: **PEROS, Dimitrios 57074 Siegen (DE)**

(74) Vertreter: **Dr. Solf & Zapf Patent- und Rechtsanwalts PartG mbB Schlossbleiche 20 42103 Wuppertal (DE)**

(56) Entgegenhaltungen:
EP-A1- 1 217 394          EP-A1- 2 336 811
WO-A1-2013/105032      DE-U1-202011 051 927

**Beschreibung**

Die vorliegende Erfindung betrifft ein Verbundmaterial für einen Solarkollektor umfassend einen aus Aluminium bestehenden Träger, mit einer auf einer Seite auf dem Träger befindlichen Zwischenschicht und mit einem auf die Zwischenschicht aufgebrachten optisch wirksamen Mehrschichtsystem, welches mindestens zwei dielektrische und/oder oxidische Schichten, nämlich eine obere Schicht und eine darunter liegende weitere Schicht - nachfolgend: "lichtabsorbierende Schicht" - mit der Primärfunktion einer Lichtabsorption, insbesondere im solaren Spektralbereich, umfasst, wobei die obere Schicht eine dielektrische Schicht mit einem Brechungsindex n ≤ 2,0 ist, und wobei unmittelbar auf der Zwischenschicht unter den mindestens zwei dielektrischen und/oder oxidischen Schichten eine metallische Schicht angeordnet ist.

Solarkollektoren werden bekanntermaßen zur Energiegewinnung aus der Sonnenstrahlung eingesetzt.

Das Spektrum der Sonne lässt sich in weiten Bereichen durch das eines sogenannten "schwarzen Strahlers" einer Temperatur von etwa 5800 K beschreiben. Das Spektrum, welches aber tatsächlich auf der Erdoberfläche ankommt, ist jedoch durch eine Vielzahl von Absorptionen in der Atmosphäre geprägt, wobei der dabei auftretende Intensitätsverlust abhängig vom Einfallswinkel der Sonnenstrahlen ist, das heißt von der Position auf der Erdkugel. Es wurde daher als normierte Angabe die normierte, sogenannte "Air-Maßzahl AM" eingeführt, in der der tatsächliche Weg der Strahlung durch die Atmosphäre ins Verhältnis zum kürzest möglichen Weg der Strahlung durch die Atmosphäre - also bei senkrechtem Einfall - gesetzt ist. Eine Air-Maßzahl AM = 1,5 entspricht dabei den Verhältnissen des Sonnenspektrums in Mitteleuropa.

Durch das einfallende solare Spektrum werden typischerweise bei Flachkollektoren im Normalbetrieb Temperaturen bis zu 100 °C erreicht. Wäre die Schicht nun ein idealer "schwarzer Strahler" (englisch: "black body"), so würde sie ein Spektrum emittieren, dessen Verteilung ähnlich dem des einfallenden Lichts ist, die jedoch ihr Maximum im Bereich der Wärmestrahlung hat. Dies bedeutet, dass ein Teil der durch Absorption und Aufheizung zuvor gewonnenen thermischen Energie wieder in Form von Wärmestrahlung verloren geht.

Allgemein teilt sich bei einem Objekt, auf das eine Strahlung auftrifft, diese Strahlung in einen reflektierten, einen absorbierten und einen transmittierten Anteil auf, die durch den Reflexionsgrad (Reflexionsvermögen) R, den Absorptionsgrad (Absorptionsvermögen) A und den Transmissionsgrad (Transmissionsvermögen) T des Objektes bestimmt werden. Bei einem strahlungsundurchlässigen Substrat wird dabei die Transmission gleich Null, so dass nur noch die Summe aus Absorption und Reflexion von Relevanz ist, d. h. R+A = 100 Prozent.

Die Quantifizierung von Absorption und Reflexion im Bereich von 250 nm bis 2500 nm erfolgt dabei in Anlehnung an die Norm EN 410:2011 ""Glas im Bauwesen: Bestimmung der lichttechnischen und strahlungsphysikalischen Kenngrößen von Verglasungen", wonach ein Gesamtreflexionsgrad bestimmt werden kann, aus dem sich bei Abwesenheit von Transmission der Absorptionsgrad als Komplement zu 1 bzw. zu 100 Prozent ergibt. Hierbei wird zur Bestimmung des solar gewichteten hemisphärischen Gesamtreflexionsgrades das Sonnenspektrum AM 1,5 nach ASTM G173-03 als einfallende Strahlung herangezogen.

Um Wärmeverluste durch Abstrahlung zu unterbinden, wird für die Anwendungsfälle von Absorber-Verbundmaterialien der eingangs genannten Art im solaren Wellenlängenbereich (300 nm bis 2500 nm, insbesondere im Bereich von 360 nm bis 1800 nm) ein maximaler Absorptionsgrad und im Bereich der Wärmestrahlung (oberhalb von etwa 2500 nm, insbesondere oberhalb von 3000 nm) ein maximaler Reflexionsgrad gefordert.

Als Ideal eines derart selektiven Absorbers, welcher in der Natur allerdings nicht vorkommt, wird in der Fachwelt demzufolge ein Absorber angesehen, der unterhalb einer bestimmten Sprungwellenlänge von beispielsweise 2500 nm (2,5 μm) das solare Spektrum zu 100 Prozent absorbiert und oberhalb dieser Wellenlänge zu 100 Prozent reflektiert. Dann wäre die Absorption und damit auch der thermische Emissionsgrad gleich Null.

Technische Absorbermaterialien werden also im Hinblick auf die Beurteilung ihrer Güte unter anderem daran gemessen, inwieweit sie sich in ihrer Absorptions-Reflexions-Charakteristik dieser idealen Sprungfunktion annähern. Sie gelten als umso besser, je steiler der Anstieg der Reflexion im Übergang vom solaren Wellenlängenbereich zum Bereich der Wärmestrahlung ist und je höher das im letzteren Bereich vorliegende Niveau der Reflektivität ist.

Zur quantitativen Bestimmung des thermischen Emissionsgrades im Spektralbereich von 2500 nm bis 19000 nm (4000 cm$^{-1}$ bis 526 cm$^{-1}$) wird auf die Vorschriften der Norm EN 12898:2001-4 "Glas im Bauwesen - Bestimmung des Emissionsgrades" zurückgegriffen.

Aus der EP 2 336 811 B1 ist ein Verbundmaterial ähnlich der eingangs genannten Art bekannt, bei dem der Veredlungsvorgang des Aluminiumträgers insbesondere aus zwei unterschiedlichen Prozessen besteht, die beide kontinuierlich betrieben werden können, und zwar aus der Erzeugung einer aus Aluminiumoxid bestehenden Zwischenschicht in einem nasschemischen Prozess, welcher zusammenfassend als Eloxieren bezeichnet wird und ein elektrolytisches Glänzen sowie eine anodische Oxydation umfasst, und aus der Aufbringung des optisch wirksamen Mehrschichtsystems im Vakuum. Bei den Schichten des optischen Mehrschichtsystems handelt es sich dabei allgemein um dielektrische Schichten, wobei die Verwendung oxidischer Schichten, wie beispielsweise Aluminiumoxid oder Titanoxid als oberste Schicht und Siliciumdioxid als mittlere Schicht, einen bevorzugten Sonderfall darstellt. Die Zwischenschicht weist bei diesem Verbundmaterial eine Dicke von nicht mehr als 30 nm auf, wobei die untere lichtabsorbierende Schicht unmittelbar auf der Zwischenschicht aufgetragen ist und die Zwischenschicht sich unmittelbar auf dem Träger befindet.

Aus der EP 1 217 394 A1 ist ein Verbundmaterial der eingangs genannten Art bekannt, das einen aus Aluminium bestehenden Träger, eine auf einer Seite auf dem Träger befindliche Zwischenschicht und ein auf die Zwischenschicht aufgebrachtes optisch wirksames Mehrschichtsystem umfasst. Die Zwischenschicht besteht dabei vorzugsweise aus anodisch oxidiertem oder elektrolytisch geglänztem und anodisch oxidiertem Aluminium, welches aus dem Trägermaterial gebildet ist. Das optisch wirksame Mehrschichtsystem besteht aus drei Schichten, wobei die beiden oberen Schichten dielektrische und/oder oxidische Schichten sind, und die unterste Schicht eine auf die Zwischenschicht aufgetragene metallische Schicht ist, die keine Transmission aufweist und ausschließlich reflektierend wirkt. Hierbei ist vorgesehen, dass die oberste Schicht des optischen Mehrschichtsystems eine dielektrische Schicht, vorzugsweise eine oxidische, fluoridische oder nitridische Schicht der chemischen Zusammensetzung $MeO_a$, $MeF_b$, $MeN_c$, mit einem Brechungsindex n < 1,8 und die mittlere Schicht des optischen Mehrschichtsystems eine chromoxidische Schicht der chemischen Zusammensetzung $CrO_z$ ist, und die unterste Schicht des optischen Mehrschichtsystems aus Gold, Silber, Kupfer, Chrom, Aluminium und/oder Molybdän besteht, wobei die Indizes a, b, c und z ein stöchiometrisches oder nichtstöchiometrisches Verhältnis in den Oxiden, Fluoriden oder Nitriden bezeichnen. Insbesondere die aus Gold, Silber, Kupfer, Chrom, Aluminium und/oder Molybdän bestehende Schicht kann aus mehreren Teilschichten bestehen und eine bevorzugte Dicke im Bereich von bis zu 500 nm aufweisen. Ein Verbundmaterial dieser Art, bei dem die unterste Schicht des optischen Mehrschichtsystems aus einer Doppelschicht gebildet ist, die aus einer oberen Chromlage und einer unteren Aluminiumlage besteht, ist zum Zeitpunkt der Anmeldung unter der Marke Mirotherm® im Handel.

In der EP 1 217 394 A1 wird beschrieben, dass bei Solarkollektoren Niedrigtemperatur-Kollektoren mit Betriebstemperaturen bis zu 100 °C und Hochtemperatur-Kollektoren mit Betriebstemperaturen über 100 °C unterschieden werden, wobei im Falle von sogenannten Tower-Anlagen, die zur Bereitstellung von Prozesswärme dienen, die Absorbertemperatur bis zu 1200 °C betragen kann.

Als charakteristische Größe für einen Solarkollektor wird häufig die sogenannte Gleichgewichts-, Stillstands- oder Stagnationstemperatur angegeben, worunter die maximale, theoretisch mögliche Einsatztemperatur des Kollektors zu verstehen ist, bei der das Material im thermischen Gleichgewicht mit der Umgebung steht. Wenn beispielsweise der Solarkollektor im Normalbetrieb läuft, zirkuliert das Wärmeträgermedium durch ihn, und die durch Absorption aufgenommene Energie wird abgeführt. Die sich dabei einstellende Betriebstemperatur kann z. B. im Bereich von unter 100 °C bis zu 120 °C liegen. Wird jedoch der Durchlauf des auf den Kollektor kühlend wirkenden Wärmeträgermediums angehalten - beispielsweise, in gewünschter Weise, weil die geforderte Verbrauchertemperatur erreicht ist, oder in unerwünschter Weise, weil eine Wärmeträger-Pumpe ausfällt - so erfolgt keine kontinuierliche Energieabfuhr mehr und die Temperatur des Solarkollektors steigt an. Sie kann dabei bei einer eingestrahlten Sonnenleistung von ca. 1 kW/m², wie sie für Europa an einem sonnigen Tag charakteristisch ist, Werte von beispielsweise 220 °C bis 250 °C erreichen. Ein Teil des flüssigen Kühlmittels bleibt dabei in der Leitung.

Jeder Kollektor muss auf diese Stagnationstemperatur hin ausgelegt werden, denn in diesen gegenüber der Betriebstemperatur höheren Temperaturbereichen besteht sonst für die zum Einsatz kommenden Wärmeträgerflüssigkeiten, wie beispielsweise Wasser-Glykol-Gemische, sowie für die Substrate und Beschichtungen des Kollektors die Gefahr, dass es zu Zersetzungen, zu einer teilweisen Verdampfung, zu einem Ausgasen, zu unerwünschten Druckanstiegen, aber zumindest zu einem relativ kurzfristigen Absinken der Leistungsfähigkeit des Kollektorelements kommt. Durch die Stagnationstemperatur wird folglich bestimmt, welchen thermischen Anforderungen die für Absorber eingesetzten Materialien standhalten müssen, was zu hohen Materialkosten führen kann. Es besteht daher ein technisches Bedürfnis, die Stagnationstemperaturen von Solarkollektoren niedrig zu halten.

Um dies zu erreichen, sieht die WO 2012/069718 A1 ein mehrschichtiges Material vor, welches eine Schicht mit variabler Oberflächenmorphologie umfasst, die auf reversible Weise in Abhängigkeit von der Temperatur variiert und die einen Oberflächenrauheitsparameter aufweist, der größer als ein erster Rauheitswert ist, wenn die Temperatur geringer als eine Schwellentemperatur ist, und der kleiner als ein zweiter Rauheitswert ist, wenn die Temperatur höher als die Schwellentemperatur ist, wobei der zweite Rauheitswert kleiner als der erste Rauheitswert ist, und wobei die Schicht mit der variablen Oberflächenmorphologie mit einer absorbierenden Schicht überzogen ist. Mit diesem mehrschichtigen Material kann erreicht werden, dass die Stagnationstemperatur nicht über 180 °C ansteigt, da mit den unterschiedlichen Rauheiten unterhalb und oberhalb der Schwellentemperatur auch ein unterschiedliches Absorptionsverhalten verbunden ist. Jedoch hat es sich im industriellen Maßstab als aufwändig erwiesen, derartige Schichten mit variabler Oberflächenmorphologie herzustellen.

Die US 9,671,137 B2 beschreibt eine diesbezüglich alternative technische Lösung. Auch hier wird in dem Verbundmaterial ein unterschiedliches Verhalten unterhalb und oberhalb einer Schwellentemperatur ausgenutzt, jedoch wird dieses Verhalten durch eine spezielle Kombination von thermochrom agierenden Vanadiumoxiden in einer selektiven Schicht bewirkt. Bei dieser Oxidkombination liegt unterhalb einer Schwellentemperatur im Wellenlängenbereich von 6 μm bis 10 μm ein hoher Transmissionsgrad von mehr als 85 Prozent vor und oberhalb der Schwellentemperatur ein niedriger Transmissionsgrad im Bereich zwischen 20 und 50 Prozent. Oberhalb der Schwellentemperatur wird dabei im Vergleich mit einem herkömmlicherweise eingesetzten Vanadiumoxid der Formel $VO_2$ eine geringere Reflektivität und damit eine höhere Abstrahlung erzielt, was sich in einer Senkung der Stagnationstemperatur auswirkt. WO 2013/105032 A1 beschreibt eine selektive Beschichtung für Solarkollektoren, die im Bereich der Wärmestrahlung ein höheres Emissionsvermögen aufweist als herkömmliche selektive Beschichtungen.

Der vorliegenden Erfindung liegt die Aufgabe zugrunde, mit vergleichsweise geringem technologischen Aufwand, insbesondere unter Vermeidung des Einsatzes von Schichtkonstituenten, die temperaturbedingte sprunghafte Eigenschaftsänderungen aufweisen, ein Verbundmaterial der eingangs beschriebenen Art mit einer besonderen Eignung für Absorber mit Betriebstemperaturen des Niedrigtemperaturbereichs bereitzustellen. Erfindungsgemäß wird dies dadurch erreicht, dass die Zwischenschicht und das optisch wirksame Mehrschichtsystem hinsichtlich ihrer optischen Eigenschaften derart ausgewählt und die Schichten derart bemessen sind, dass bei einer solaren Absorption von mindestens 92 Prozent die solare Strahlung in einem Wellenlängenbereich von 1500 nm bis 5000 nm zu nicht mehr als 20 Prozent bis 35 Prozent, und in einem Wellenlängenbereich von 5000 nm bis 10000 nm zu 25 Prozent bis 90 Prozent reflektiert wird, wobei in dem Wellenlängenbereich von 5000 nm bis 10000 nm über den ganzen Wellenlängenbereich der Strahlung hinweg ein stetiger Anstieg eines von Wellenlängen abhängigen Reflexionsgrades des Verbundmaterials mit der Wellenlänge erfolgt.

In bevorzugter Ausführung der Erfindung kann vorgesehen sein, dass die Zwischenschicht und das optisch wirksame Mehrschichtsystem hinsichtlich ihrer optischen Eigenschaften, insbesondere hinsichtlich der Refraktion und Extinktion der Schichten, derart ausgewählt und die Schichten derart bemessen sind, dass einfallende Strahlung in einem Wellenlängenbereich größer/gleich 5200 nm zu mindestens 30 Prozent, vorzugsweise zu mindestens 40 Prozent, und in einem Wellenlängenbereich größer/gleich 6500 nm zu mindestens 55 Prozent, vorzugsweise zu mindestens 60 Prozent, reflektiert wird.

Durch die Erfindung wird die fachübliche Denkweise durchbrochen, dass die Qualität eines Absorber-Verbundmaterials umso besser ist, je mehr sich seine Absorptions-Reflexions-Charakteristik der idealen Sprungfunktion eines nur auf eine bestimmte Betriebstemperatur bezogenen "schwarzen Strahlers" annähert, wobei der thermischen Dynamik Rechnung getragen wird, die sich nach einem Kollektorstillstand einstellt.

Der erfindungsgemäße Ansatz basiert darauf, dass sich das Emissionsmaximum eines "schwarzen Strahlers" mit der Temperatur, insbesondere beim Übergang von einer Betriebstemperatur zu einer Stagnationstemperatur, ändert, und die wellenlängenabhängige Absorptions-Reflexions-Charakteristik sowohl unter Berücksichtigung der Betriebstemperatur als auch der Stagnationstemperatur ausgelegt wird.

So liegt beispielsweise das Emissionsmaximum eines "schwarzen Strahlers" einer Temperatur von 80 °C, die eine übliche Betriebstemperatur des NiedrigtemperaturBereichs beschreiben kann, bei einer Wellenlänge von etwa 8200 nm, während dieses Maximum bei einer Temperatur von 200 °C, die eine übliche Stagnationstemperatur derartiger herkömmlicher Absorbermaterialien darstellt, bei nur 6124 nm liegt. Während die üblichen Absorbermaterialien bei dieser Wellenlänge Werte des Reflexionsgrades von über 90 Prozent aufweisen, liegt erfindungsgemäß bei dieser Wellenlänge der Reflexionsgrad signifikant niedriger, z. B. bei etwa nur der Hälfte des genannten Wertes. Das bedeutet, dass die thermische Abstrahlung bei dieser Temperatur sehr viel höher ist, so dass sich das Gleichgewicht zwischen solarer Absorption und Emission bei Unterbrechung der Abführung der Nutzwärme schon bei vergleichsweise niedrigeren Temperaturen einstellt.

Dies kann erfindungsgemäß vorteilhafterweise zu einer Reduktion der Stagnationstemperatur eines Flachkollektors um 40 K und mehr führen, was in Bezug auf Wärmeträgerflüssigkeiten, Substrate und Beschichtungen des Kollektors die Gefahr von Zersetzungen, Verdampfung, Ausgasen, unerwünschten Druckanstiegen, Absinken der Leistungsfähigkeit des Kollektorelements usw. bedeutend minimiert, also hinsichtlich aller eingangs genannten, mit hohen Stilistandstemperaturen verbundenen nachteilhaften Erscheinungen Abhilfe schafft. Dabei kann mit Vorteil auf den Einsatz von Materialien, die auf einem temperaturbedingten sprunghaften Eigenschaftswechsel basieren, verzichtet werden.

Das erfindungsgemäße optische Mehrschichtsystem ist dabei mit Vorteil in auf technologisch bewährter Weise aufbringbar. So können die mindestens zwei dielektrischen und/oder oxidischen Schichten des optischen Mehrschichtsystems, die metallische Schicht und/oder die Zwischenschicht Sputterschichten, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten sein, so dass es sich vorteilhafterweise um in Vakuumfolge in einem kontinuierlichen Verfahren aufgetragene Schichten handelt. Bei der Zwischenschicht auf dem Träger handelt es sich auch um eine aus Aluminiumoxid bestehende Schicht, die vorzugsweise aus anodisch oxiertem oder elektrolytisch geglänztem und anodisch oxiertem Trägermaterial gebildet ist.

Die lichtabsorbierende Schicht kann dabei ein Titan-Aluminium-Mischoxid und/oder ein Titan-Aluminium-Mischnitrid und/oder ein Titan-Aluminium-Mischoxinitrid der chemischen Zusammensetzung $TiAl_qO_xN_y$ enthalten, wobei die Indizes q, x und y jeweils ein stöchiometrisches oder nichtstöchiometrisches Verhältnis bezeichnen.

Es kann mit Vorteil auch vorgesehen sein, dass die lichtabsorbierende Schicht des optischen Mehrschichtsystems Chromoxid der chemischen Zusammensetzung $CrO_z$ und/oder Chromnitrid der chemischen Zusammensetzung

CrN$_v$ und/oder Chromcarbid CrC$_p$ und/oder Chromoxinitrid der chemischen Zusammensetzung CrO$_z$N$_v$ und/oder Chromoxicarbid CrO$_z$C$_p$ und/oder Chromoxicarbonitrid CrO$_z$C$_p$N$_v$ enthält, wobei die Indizes z, v und p jeweils ein stöchiometrisches oder nichtstöchiometrisches Verhältnis bezeichnen.

Bei der oberen Schicht kann es sich bevorzugt um eine siliciumoxidische Schicht der chemischen Zusammensetzung SiO$_w$ handeln, wobei der Index w wiederum ein stöchiometrisches oder nichtstöchiometrisches Verhältnis in der oxidischen Zusammensetzung bezeichnet. Diese Schicht hat eine entspiegelnde Wirkung und weist ein hohes Transmissionsvermögen auf, wodurch sich der Anteil der in der lichtabsorbierenden Schicht absorbierbaren Strahlungswerte im solaren Bereich erhöht.

Die genannten Verfahren gestatten es vorteilhafterweise dabei, die chemische Zusammensetzung der Schichten hinsichtlich der Indizes p, q, v, w, x, y und z nicht nur auf bestimmte, diskrete Werte einzustellen, sondern das stöchiometrische oder nichtstöchiometrische Verhältnis jeweils innerhalb bestimmter Grenzen fließend zu variieren. Die stöchiometrischen oder nichtstöchiometrischen Verhältnisse p, q, v, w, x, y, z können dabei im Bereich $0 < p$ und/oder q und/oder v und/oder x und/oder y und/oder $z < 3$ und/oder $1 \leq w \leq 2$ liegen. Dadurch können beispielsweise der Brechungsindex der reflexionsmindernden obersten Schicht, die auch ein Ansteigen der Werte für die mechanische Belastbarkeit (gemessen nach DIN ISO 9211-4:2008-06) bewirkt, und der Absorptionsgrad der lichtabsorbierenden Schicht gezielt eingestellt werden, wobei beispielsweise mit zunehmendem Wert der Indizes x und/oder z die Absorptionsfähigkeit abnimmt. Auch die jeweiligen Anteile des Titan-Aluminium-Mischoxids, -nitrids und/oder -oxinitrids bzw. die Anteile der entsprechenden Chromverbindungen in der lichtabsorbierenden Schicht können so gesteuert werden.

Die erfindungsgemäß gegenüber dem Stand der Technik veränderte wellenlängenabhängige Absorptions-Reflexions-Charakteristik sieht auch bei der Betriebstemperatur eine Absenkung des Reflexionsgrades im Vergleich mit herkömmlichen Absorbermaterialien vor. Jedoch bewirkt die dadurch geringfügig kleinere Effizienz nur eine gegenüber den erzielten Vorteilen signifikant unterproportionale Reduktion des Jahresertrages an Wärmeenergie von höchstens etwa 5 Prozent, was in einer Kosten-Nutzen-Analyse einen Synergieeffekt der Erfindung ausweist.

Was die Einstellung der erfindungsgemäßen wellenlängenabhängigen Absorptions-Reflexions-Charakteristik betrifft, so ist erfindungsgemäß vorgesehen, dass die metallische Schicht zumindest in einem Wellenlängenbereich von 300 nm bis 2500 nm, insbesondere im Bereich von 360 nm bis 1800 nm, semitransparent ist, d. h. insbesondere einen Transmissionsgrad im Bereich von 30 Prozent bis 80 Prozent, vorzugsweise von 40 Prozent bis 60 Prozent, aufweist, wobei die metallische Schicht insbesondere aus einem Nichtedelmetall, insbesondere aus einem Übergangsmetall, die bevorzugt aus Titan oder aus Chrom oder aus einem Seltenerdmetall oder aus einer Legierung derselben bestehen kann. Die metallische Schicht weist dabei eine nur sehr geringe Dicke im Bereich von 3 nm bis 14 nm, insbesondere im Bereich von 5 nm bis 12 nm, auf und ist insbesondere einlagig ausgebildet.

Weitere vorteilhafte Ausführungen der Erfindung sind in den Unteransprüchen und in der nachfolgenden detaillierten Beschreibung enthalten.

Anhand von durch die beiliegenden Zeichnungen veranschaulichten Ausführungsbeispielen wird die Erfindung näher erläutert.

Dabei zeigen:

Fig. 1    eine diagrammatische Darstellung der wellenlängenabhängigen relativen Intensität eines solar gewichteten hemisphärischen Gesamtreflexionsgrades und eines "schwarzen Strahlers" sowie der wellenlängenabhängigen Reflektivität eines fachüblich als ideal angesehenen selektiven Absorbermaterials,

Fig. 2    eine ähnliche Darstellung wie in Fig. 1, wobei anstelle der wellenlängenabhängigen Reflektivität des als ideal angesehenen selektiven Absorbermaterials als Vergleichsbeispiele die wellenlängenabhängigen Reflektivitäten dreier marktüblicher Verbundmaterialien angegeben sind,

Fig. 3    eine ähnliche Darstellung wie in Fig. 1 und 2, welche die simulierte wellenlängenabhängige Reflektivität eines marktüblichen Verbundmaterials aus Fig. 2 im Vergleich mit einer idealisiert dargestellten typischen Ausführung eines erfindungsgemäßen Verbundmaterials zeigt,

Fig. 4    eine Darstellung der Abhängigkeit der spektralen Energiedichte eines "schwarzen Strahlers" von der Wellenlänge und Temperatur,

Fig. 5    eine Darstellung des Schichtaufbaus eines erfindungsgemäßen Verbundmaterials,

Fig. 6    das Ergebnis einer Tiefenprofilanalyse in einer diagrammatischen Darstellung von Element-Atomkonzentration über einer Schichtabtragungszeit für eine bevorzugte Ausführung eines erfindungsgemäßen Verbundmaterials,

Fig. 7      eine diagrammatische Darstellung des im solaren Spektralbereich gemessenen Reflexionsspektrums von zwei bevorzugten Ausführungen eines erfindungsgemäßen Verbundmaterials,

Fig. 8      eine diagrammatische Darstellung des im infraroten Spektralbereich gemessenen Reflexionsspektrums der beiden bevorzugten Ausführungen eines erfindungsgemäßen Verbundmaterials,

Fig. 9      eine diagrammatische Darstellung des typischen Verlaufs des Emissionsgrades der beiden bevorzugten Ausführungen eines erfindungsgemäßen Verbundmaterials in Abhängigkeit von der Temperatur,

Fig. 10      eine diagrammatische Darstellung des temperaturabhängigen Reflexionsgrades des erfindungsgemäßen Verbundmaterials vor und nach einer Alterung.

Zu der anschließenden Beschreibung wird ausdrücklich betont, dass die Erfindung nicht auf die Ausführungsbeispiele und dabei auch nicht auf alle oder mehrere Merkmale von beschriebenen Merkmalskombinationen beschränkt ist.

In den verschiedenen Figuren der Zeichnung sind dieselben Teile auch stets mit denselben Bezugszeichen versehen, so dass sie in der Regel auch jeweils nur einmal beschrieben werden.

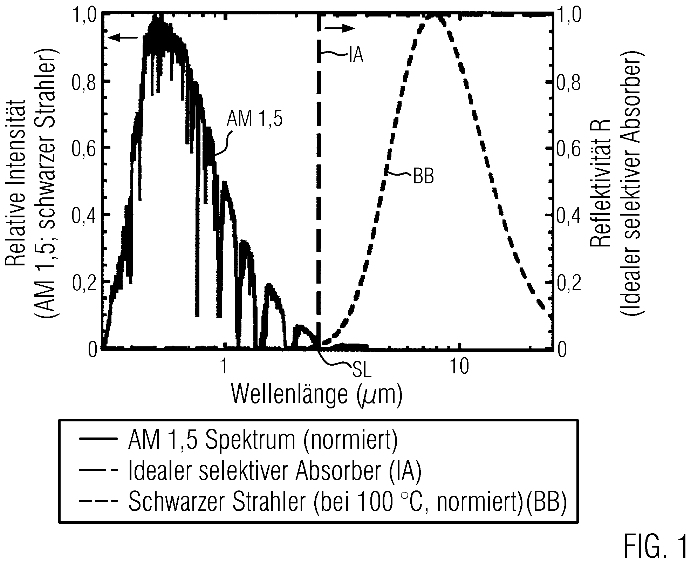

Der diagrammatischen Darstellung der wellenlängenabhängigen relativen Intensität des Sonnenspektrums und des "schwarzen Strahlers" in Fig. 1 ist zunächst auf der linken Seite - im solaren Bereich - das genormte Sonnenspektrum AM1,5 nach ASTM G173-03 zu entnehmen, welches bereits einleitend erläutert wurde. Die rechte Seite des Diagramms zeigt die spektrale Verteilungsdichte des "schwarzen Strahlers" BB bei einer Temperatur von 100 °C (normiert). Des Weiteren zeigt Fig. 1 die von der Wellenlänge abhängige Reflektivität eines fachüblich als ideal angesehenen selektiven Absorbermaterials IA, welches in einem Bereich unterhalb einer bestimmten Sprungwellenlänge SL von beispielsweise 2500 nm (2,5 $\mu$m) das solare Spektrum zu nahezu 100 Prozent absorbiert und in einem Bereich oberhalb dieser Wellenlänge zu 100 Prozent reflektiert. Die Erfindung löst sich von diesem Idealbild eines Absorbers.

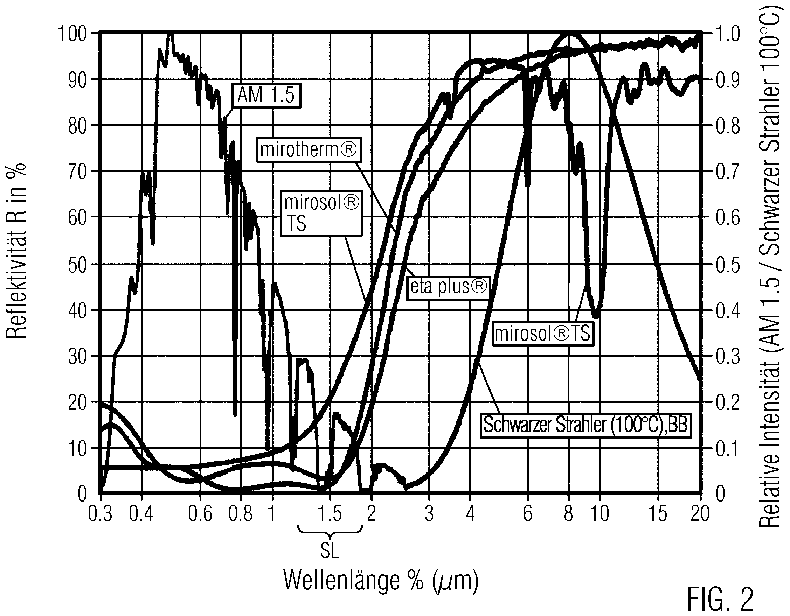

Aus Fig. 2 ist für drei zum Zeitpunkt der Anmeldung auf dem Markt befindliche Verbundmaterialien der Anmelderin zu entnehmen, wie sich die wellenlängenabhängige Reflektivität R (Gesamtreflexion in Prozent) realerweise an die als ideal angesehene selektive Absorptions-Reflexions-Charakteristik annähert. Diese Materialien werden unter den Marken Eta plus®, mirotherm® und mirosol® TS zum Zeitpunkt der Anmeldung angeboten und sind selektive Absorber-Schichtsysteme für Solarkollektoren. Die Schichtsysteme von eta plus® und mirotherm® werden zum Zeitpunkt der Anmeldung in einem PVD-Verfahren kontinuierlich in einem sogenannten "Air-to-air"-Prozess aufgedampft. Dabei werden Absorptionsgrade von bis zu 95 % bei gleichzeitig niedriger Emission $\varepsilon$ von maximal 5 % erreicht. Dies veranschaulichen insbesondere die Kurvenverläufe $\varepsilon$ ($\lambda$) ab einer Wellenlänge $\lambda$ von etwa 4,0 $\mu$m, wobei die Kurven jeweils ein Plateau erreichen, wo sie sich nur noch wenig ändern. Die jeweilige Sprungwellenlänge SL der Reflexionskurven liegt in einem Bereich $\lambda$ von etwa 1,2 $\mu$m bis 1,8 $\mu$m (1200 nm bis 1800 nm).

Bei dem Material mirosol® TS handelt es sich zum Zeitpunkt der Anmeldung um ein System mit einem selektiv absorbierenden Lack, der in einem sogenannten "Coil-coating"-Verfahren (Fertigung von Rolle zu Rolle) aufgebracht wird. Dieser selektive Lack ist vorteilhafterweise im Sinne eines hohen Schutzes der Oberfläche gegen Verunreinigungen hydrophob und unempfindlich gegen Fingerabdrücke, bewirkt allerdings ein lokales Reflexionsminimum bei etwa 10 $\mu$m.

Die vorgenannten Absorber-Verbundmaterialien finden Anwendung in unterschiedlichen Typen solarthermischer Kollektoren. Hier werden größtenteils auf der Rückseite der Absorber Kupfer- oder Aluminiumrohre als Wärmeleiter aufgeschweißt. Diesbezüglich hat sich ein Laserschweißen als optimale Verbindungstechnologie etabliert. Die genannten Verbundmaterialien haben sich in der Praxis bewährt, wobei eine Einsparung an produziertem $CO_2$ pro Jahr im Millionen-Tonnenbereich erreicht wurde.

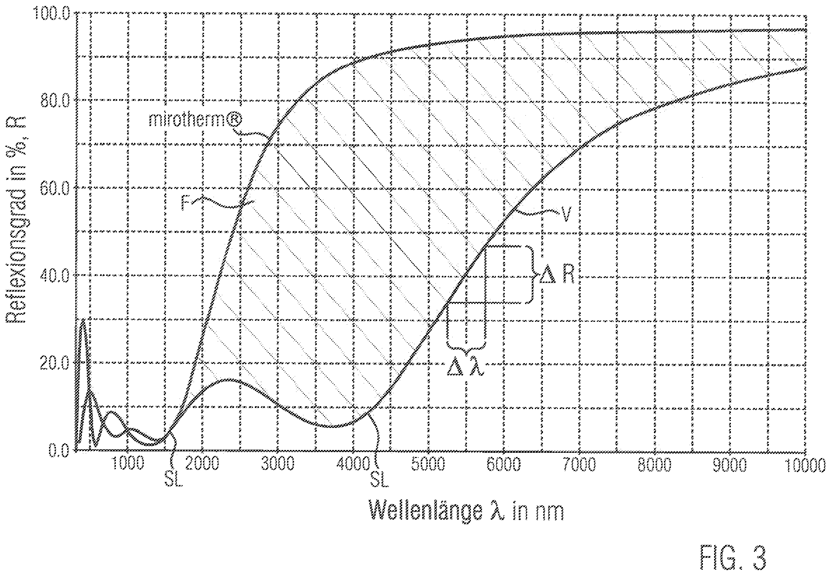

Fig. 3 zeigt von den in Fig. 2 dargestellten wellenlängenabhängigen Reflektivitäten R nur des vorgenannten Materials mirotherm® im Vergleich mit einer idealisiert dargestellten typischen Ausführung eines erfindungsgemäßen Verbundmaterials V. Es ist zu sehen, dass die Sprungwellenlänge SL des erfindungsgemäßen Verbundmaterials V gegenüber dem vorgenannten Material in einen längerwelligen Bereich verschoben ist.

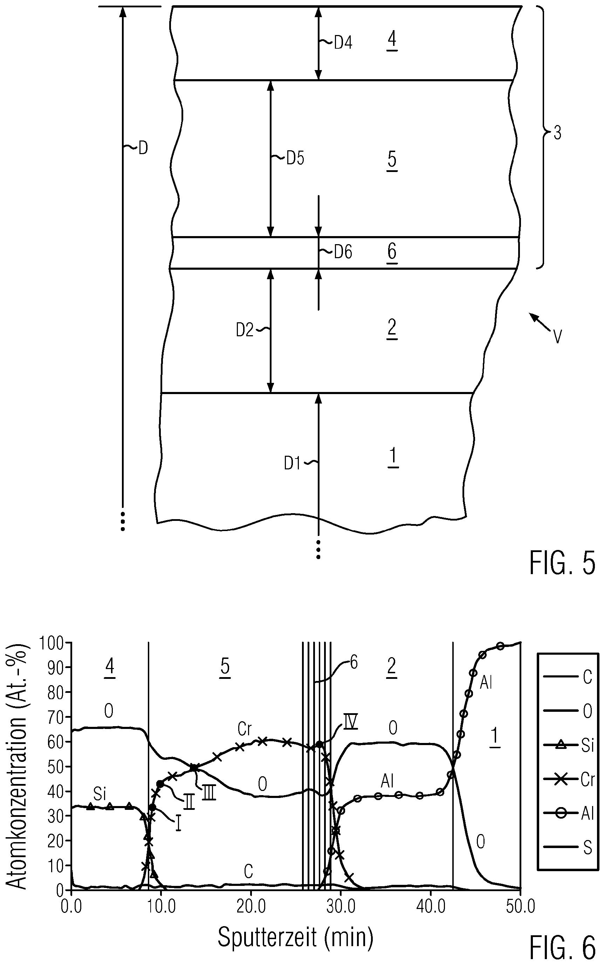

Außerdem ist zu sehen, dass das erfindungsgemäße Verbundmaterial V - und wie im Weiteren, insbesondere unter Bezugnahme auf Fig. 5 bis 8 noch erläutert werden wird - insbesondere dessen auf dem Träger 1 befindliche Zwischenschicht 2 sowie das darauf aufgebrachte optisch wirksame Mehrschichtsystem 3, hinsichtlich ihrer optischen Eigenschaften derart ausgewählt und die Schichten 2, 4, 5, 6 derart bemessen sind, dass ein solarer Absorptionsgrad $\alpha$ von mindestens 92 Prozent vorliegt. In einem Wellenlängenbereich $\lambda$ von 1500 nm bis 5000 nm wird die einfallende Strahlung zu nicht mehr als 20 Prozent bis 35 Prozent reflektiert, und in einem Wellenlängenbereich $\lambda$ von 5000 nm bis 10000 nm zu 25 Prozent bis 90 Prozent. Dabei ist in diesem Bereich ein stetiger, insbesondere nahezu linearer, Anstieg des Reflexionsgrades R mit der Wellenlänge $\lambda$ zu beobachten.

In bevorzugter Ausführung sind die Zwischenschicht 2 und das optisch wirksame Mehrschichtsystem 3 des erfindungsgemäßen Verbundmaterials V hinsichtlich ihrer optischen Eigenschaften, insbesondere hinsichtlich der Refraktion und Extinktion der Schichten 2, 4, 5, 6, derart ausgewählt und die Schichten 2, 4, 5, 6 derart bemessen, dass einfallende Strahlung in einem Wellenlängenbereich λ über 5200 nm zu mindestens 30 Prozent, vorzugsweise zu mindesten 40 Prozent, und in einem Wellenlängenbereich λ über 6500 nm zu mindestens 55 Prozent, vorzugsweise zu mindestens 60 Prozent, reflektiert wird, wie dies die exemplarische Darstellung in Fig. 3 ebenfalls veranschaulicht.

In bevorzugter Ausführung der Erfindung liegt im Wellenlängenbereich λ von 4200 nm bis 6600 nm, vorzugsweise im Bereich von 5000 nm bis 6200 nm, ein mittlerer Anstieg des Reflexionsgrades über der Wellenlänge ΔR / Δλ im Bereich von 21 Prozent pro μm bis 25 Prozent pro μm vor.

Im Wellenlängenbereich λ von 6200 nm bis 10000 nm, vorzugsweise im Bereich von 6600 nm bis 9000 nm, kann dieser mittlere Anstieg des Reflexionsgrades über der Wellenlänge ΔR / Δλ bevorzugt im Bereich von 5 Prozent pro μm bis 10 Prozent pro μm liegen.

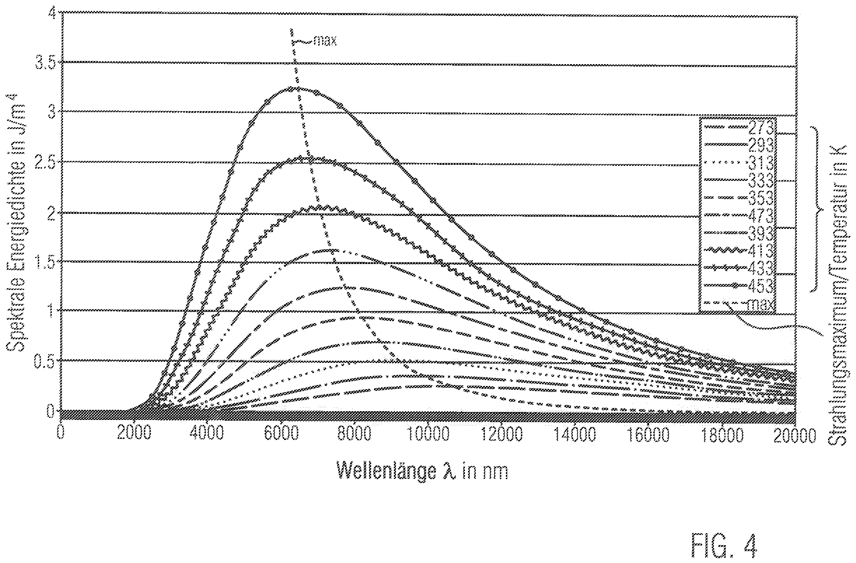

Im Gegensatz zu den bekannten Absorbermaterialien, bei deren konstruktivem Entwurf - wie Fig. 1 zeigt - Bezug auf die Emission des "schwarzen Strahlers" bei einer genormten Temperatur von 100 °C genommen wird, berücksichtigt die Erfindung in ihrer originären Absorptions-Emissions-Charakteristik die temperaturabhängige Verschiebung des Emissionsmaximums des "schwarzen Strahlers" über der Wellenlänge λ. Die Darstellung der Abhängigkeit der spektralen Energiedichte eines "schwarzen Strahlers" von Wellenlänge λ (auf der Abszisse) und von der Temperatur T (als Parameter der Kurven) in Fig. 4 veranschaulicht dabei, wie sich das Strahlungsmaximum des "schwarzen Strahlers" im Bereich von 273 K bis 453 K mit steigender Temperatur T zu niedrigeren Wellenlängen A verschiebt, wobei der absolute Wert des Strahlungsmaximums ansteigt. Dies veranschaulicht die punktierte Linie "max". Jeder Absorbertemperatur T kann dadurch zur Festlegung der erfindungsgemäßen Absorptions-Emissions-Charakteristik eine Wellenlänge A zugeordnet werden, bei der eine jeweils maximale Emission erfolgt und umgekehrt.

Dabei ist das erfindungsgemäße Verbundmaterial V so ausgelegt, dass, wenn bei Unterbrechung der Abfuhr der Nutzwärme die Absorbertemperatur T ansteigt, gleichzeitig auch die thermische Emission, also der Emissionsgrad ε, zunimmt. Das erfindungsgemäße Verbundmaterial V erfüllt auf diese Weise mit Vorteil eine autoregulatorische Funktion, indem sich bei höherer Temperatur durch die stärkere Emission selbsttätig auch eine stärkere Kühlung einstellt, weil der Epsilon-Wert im relevanten Temperaturbereich, insbesondere im Bereich von 80 °C bis 200 °C, stetig zunimmt.

Der Wert des Emissionsgrades ε liegt dabei beispielsweise bei einer Temperatur von 30 °C bei 20 %, also bei weniger als 25 %, womit einer Temperatur der maximalen Abstrahlung von weniger als 50 °C Rechnung getragen wird. Bei 80 °C liegt das Emissionsmaximum des "schwarzen Strahlers" bei einer Wellenlänge λ von ca. 8200 nm. Bei dieser Wellenlänge liegt die Reflexion des vorgenannten Materials mirotherm® bei ca. 95 %, die des erfindungsgemäßen Verbundmaterials V beispielsweise bei ca. 80 %, wobei beide Kurven die gleiche Solarlichtabsorption a aufweisen. Wird eine Absorberoberflächentemperatur von 200 °C zugrunde gelegt, dann verschiebt sich das Emissionsmaximum zu einer Wellenlänge von etwa 6124 nm. Während die Reflexion des vorgenannten mirotherm®-Materials dort praktisch unverändert bleibt - der ε-Wert wird dabei also nahezu gar nicht beeinflusst -, sinkt die Reflexion des erfindungsgemäßen Verbundmaterials V auf ca. 55 %. Dadurch strahlt eine Absorberoberfläche bei dieser Temperatur deutlich mehr ab, was zu einer Temperatursenkung, also zu einer niedrigeren Stagnationstemperatur, führt. Der im Wellenlängenbereich λ oberhalb der Sprungwellenlänge SL des vorgenannten mirotherm®-Materials vorliegende Unterschied ist dabei in Fig. 3 durch eine schraffierte Fläche F markiert. Der in dieser Fläche F bekanntermaßen reflektierte Strahlungsanteil wird erfindungsgemäß absorbiert.

Fig. 5 zeigt, dass das erfindungsgemäße Verbundmaterial V jeweils aus einem, insbesondere verformungsfähigen, bandförmigen Träger 1 aus Aluminium besteht, wobei sich auf einer Seite des Trägers 1 eine Zwischenschicht 2 befindet und wiederum auf der Zwischenschicht 2 ein optisch wirksames Mehrschichtsystem 3 aufgebracht ist.

Das erfindungsgemäße Verbundmaterial V kann bevorzugt als Coil mit einer Breite von bis zu 1600 mm, vorzugsweise von 1250 mm, und mit einer Dicke D von etwa 0,1 mm bis 1,5 mm, vorzugsweise von etwa 0,2 mm bis 0,8 mm, ausgebildet sein. Der Träger 1 kann dabei vorzugsweise eine Dicke D1 von etwa 0,1 mm bis 0,7 mm besitzen. Das Aluminium des Trägers 1 kann insbesondere eine höhere Reinheit als 99,0 Prozent aufweisen, wodurch die Wärmeleitfähigkeit gefördert wird.

Die Zwischenschicht 2 auf dem Träger 1 ist eine aus Aluminiumoxid bestehende Schicht ist, die vorzugsweise aus anodisch oxidiertem oder elektrolytisch geglänztem und anodisch oxidiertem Trägermaterial gebildet sein kann. Sie weist eine Dicke D2 im Bereich von 100 nm bis 250 nm, vorzugsweise im Bereich von 130 nm bis 180 nm, auf.

Das erfindungsgemäße Mehrschichtsystem 3 umfasst zwei Einzelschichten 4, 5, wobei unmittelbar auf der Zwischenschicht 2 unter diesen beiden Schichten 4, 5 eine dem optischen Mehrschichtsystem 3 ebenfalls zugehörige metallische Schicht 6 angeordnet ist.

Die obere Schicht 4 des optischen Mehrschichtsystems 3 ist eine dielektrische Schicht mit einem Brechungsindex $n \leq 2,0$ und kann insbesondere eine siliciumoxidische Schicht der chemischen Zusammensetzung $SiO_w$ sein. Die untere Schicht 5 ist eine lichtabsorbierende Schicht, die bevorzugt ein Titan-Aluminium-Mischoxid und/oder ein Titan-Aluminium-Mischnitrid und/oder ein Titan-Aluminium-Mischoxinitrid der chemischen Zusammensetzung $TiAl_qO_xN_y$ enthält. Diese Schicht 5 kann alternativ oder zusätzlich und/oder in einer separaten Teilschicht auch Chromoxid der chemischen Zusammensetzung $CrO_z$ und/oder Chromnitrid der chemischen Zusammensetzung $CrN_v$ und/oder Chromoxi-

nitrid der chemischen Zusammensetzung $CrO_zN_v$ enthalten. Die Indizes q, v, x, y, z bezeichnen dabei jeweils ein stöchiometrisches oder nichtstöchiometrisches Verhältnis des oxidierten oder nitrierten Stoffes zum Sauerstoff in den Oxiden bzw. im Oxinitrid bzw. des Aluminiums zum Titan. Die stöchiometrischen oder nichtstöchiometrischen Verhältnisse können vorzugsweise im Bereich 0 < q und/oder v und/oder x und/oder y und/oder z < 3 liegen, während das stöchiometrische oder nichtstöchiometrische Verhältnis w Werte im Bereich $1 \leq w \leq 2$ annehmen kann.

Dadurch, dass gemäß der Erfindung die beiden Schichten 4, 5 des optischen Mehrschichtsystems 3 Sputterschichten sein können, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten, ist es möglich, die Verhältnisse q, v, w, x, y, z ungestuft (also auch auf nichtstöchiometrische Werte der Indizes) einzustellen, wodurch die jeweiligen Schichteigenschaften variiert und die Schichten auch als Gradientenschichten mit über die Schichtdicke zunehmenden und/ oder abnehmenden Indizes q, v, w, x, y, z ausgebildet werden können.

Im Hinblick auf eine ausreichende Effizienz für die Funktion einer Reflexionsminderung liegt zum Beispiel ein oberer Grenzwert der Schichtdicke D4 der oberen Schicht 4 des optischen Mehrschichtsystems 3 bei 500 nm. Ein Vorzugsbereich der Dicke D4 erstreckt sich von 60 nm bis 250 nm und ein besonders bevorzugter Bereich von 100 nm bis 150 nm.

Ein für die lichtabsorbierende Schicht 5 des erfindungsgemäßen optischen Mehrschichtsystems 3 unter den genannten Gesichtspunkten optimaler Wert ist eine minimale Dicke D5 von größer/gleich 100 nm, maximal 1 $\mu$m, insbesondere ein Wert im Bereich von 150 nm bis 500 nm, besonders bevorzugt im Bereich von 200 nm bis 300 nm.

Die metallische Schicht 6 ist gemäß der Erfindung zumindest in einem Wellenlängenbereich von 300 nm bis 2500 nm, insbesondere im Bereich von 360 nm bis 1800 nm, semitransparent, d. h. sie weist insbesondere einen Transmissionsgrad im Bereich von 30 Prozent bis 80 Prozent, vorzugsweise von 40 Prozent bis 60 Prozent, auf. Sie kann bevorzugt aus einem Nichtedelmetall, insbesondere aus einem Übergangsmetall, wie besonders bevorzugt aus Titan oder aus Chrom oder aus einem Seltenerdmetall, oder aus einer Legierung derselben bestehen. Die metallische Schicht weist eine Dicke D6 im Bereich von 3 nm bis 14 nm, insbesondere im Bereich von 5 nm bis 12 nm, auf, wobei sie insbesondere einlagig ausgebildet ist. Auch die metallische Schicht 6 kann eine Sputterschicht sein bzw. eine durch Verdampfen, insbesondere eine durch Elektronenbombardement oder aus thermischen Quellen, erzeugte Schicht.

Fig. 6 repräsentiert das Ergebnis einer Analyse, die mittels der Photoelektronen-Spektroskopie (XPS) durchgeführt wurde. Zum kontinuierlichen Schichtabtrag können dabei, wie bei Verwendung des zur Analyse eingesetzten Gerätes "Quantum 2000" der Firma PHI Physical Electronics, welches auf einer Anregung mit Al-Ka-Strahlung beruht, z. B. mit einer 4 keV-Quelle beschleunigte Argon-Sputterionen eingesetzt werden.

In Fig. 6 sind den in Minuten angegebenen Abtragungszeiten (Sputterzeiten) einer besonders bevorzugten Konstituierung der verschiedenen Schichten 1, 2, 4, 5 und 6 des erfindungsgemäßen Verbundsystems hinsichtlich ihrer Zusammensetzung und Dickenverhältnisse zugeordnet, und es ist auch angegeben, wie sich daraus die jeweilige Schicht 8 bzw. das optische Mehrschichtsystem 3 ergibt.

Links in Fig. 6 ist zunächst die obere Schicht 4 des optischen Mehrschichtsystems 3 zu sehen, welche eine siliciumoxidische Schicht ist und an der Oberfläche einen vernachlässigbar kleinen Anteil an Kohlenstoff aufweist. Die Dicke D4 der Schicht liegt bei etwa 120 nm. Das Verhältnis der Atomkonzentrationen von Silicium (Si) zu Sauerstoff (O) beträgt etwa 33,3 Prozent zu 66,6 Prozent in der chemischen Gesamt-Zusammensetzung, wodurch das Vorliegen einer stöchiometrisch zusammengesetzten Siliciumdioxidschicht ($SiO_2$) veranschaulicht wird. Der Index w der siliciumoxidischen Schicht mit der chemischen Zusammensetzung $SiO_w$ ist also 2.

Weiter nach rechts in Fig. 6 schließt sich die lichtabsorbierende Schicht 5 an, in der der Sauerstoffgehalt (O) kontinuierlich abnimmt und der Chromgehalt (Cr) kontinuierlich zunimmt. Die Dicke D5 der Schicht liegt bei etwa 268 nm. Der Anteil weiterer Elemente ist unter Berücksichtigung der vorstehend genannten Unschärfen an den Schichtgrenzen vernachlässigbar klein. Markant sind in dem Kurvenverlauf dabei die Zeitpunkte der Sputterzeiten, welche in der Grafik mit I, II und III bezeichnet sind. Zum Zeitpunkt I liegt ein Verhältnis der Atomkonzentrationen von Chrom (Cr) zu Sauerstoff (O) von etwa 33,3 Prozent zu 66,6 Prozent in der chemischen Gesamt-Zusammensetzung vor, wodurch an dieser Stelle das Vorliegen einer gegenüber dem dreiwertigen Chrom überstöchiometrisch zusammengesetzten chromoxidischen Schicht ($CrO_2$) veranschaulicht wird. Der Index z der chromoxidischen Schicht der allgemeinen chemischen Zusammensetzung $CrO_z$ ist hier etwa 2. Zum Zeitpunkt II liegt ein Verhältnis der Atomkonzentrationen von Chrom (Cr) zu Sauerstoff (O) von etwa 40,0 Prozent zu 60,0 Prozent in der chemischen Gesamt-Zusammensetzung vor, wodurch an dieser Stelle das Vorliegen einer im Hinblick auf das dreiwertige Chrom stöchiometrisch zusammengesetzen chromoxidischen Schicht ($Cr_2O_3$) veranschaulicht wird. Der Index z der chromoxidischen Schicht der allgemeinen chemischen Zusammensetzung $CrO_z$ liegt hier bei etwa 1,5. Mit zunehmender Tiefe wird das Cr-O-Verhältnis der Schicht 5 dann unterstöchiometrisch, wobei zum Zeitpunkt III der Abtragung ein Verhältnis der Atomkonzentrationen von Chrom (Cr) zu Sauerstoff (O) von etwa 50,0 Prozent zu 50,0 Prozent in der chemischen Gesamt-Zusammensetzung bestimmt werden konnte, was an dieser Stelle auf das Vorliegen einer chromoxidischen Schicht der Zusammensetzung CrO hinweist. Der Index z der chromoxidischen Schicht der allgemeinen chemischen Zusammensetzung $CrO_z$ liegt hier bei etwa 1,0 und wird mit zunehmender Schichttiefe kleiner als 1,0. Da der Punkt II schon etwa nach 10 Prozent der Zeit erreicht wurde, die insgesamt zum Absputtern der lichtabsorbierenden Schicht 5 notwendig war, besteht die Schicht 5 also zu etwa 90 Prozent ihrer Tiefe aus gegenüber dem dreiwertigen Chrom unterstöchiometisch zusammengesetzten Cr-O-Verbindungen.

In der aus Chrom bestehenden metallischen Schicht 6 sollte die Kurve theoretisch auf 100 Atomprozent Chrom anwachsen und der Sauerstoffgehalt auf 0 Atomprozent absinken. Aufgrund der genannten Unschärfen und der geringen Schichtdicke D6 von 3 bis 6 nm ist dies zwar nicht der Fall, jedoch ist der in diesem Bereich der Sputterzeit auftretende Chrompeak IV sowie das ihm zugeordnete Sauerstoffminimum ausreichend signifikativ für den Nachweis der metallischen Chromschicht 6.

Bei der in Fig. 6 dargestellten Zwischenschicht 2 handelt es sich - wie bereits erwähnt - um eine aus Aluminiumoxid (Eloxal) bestehende Schicht auf dem Aluminiumträger 1, was durch eine mittlere Relation der Atomkonzentrationen 33,3 Prozent Aluminium (Al) zu 66,6 Prozent Sauerstoff (O), zum Ausdruck kommt, wobei die Zwischenschicht 2 dann schließlich in das Reinaluminium des Trägers 1 übergeht. Die Schicht hat eine Dicke D2 von etwa 173 nm.

Erfindungsgemäß steht das Verbundmaterial V im Gegensatz zum Stand der Technik, wo die bekannte metallische Schicht nicht semitransparent, sondern reflektierend ist. Dadurch weisen die bekannte Zwischenschicht und der bekannte Träger keine optischen Funktionen auf. Erfindungsgemäß ist stattdessen vorteilhafterweise das optische Mehrschichtsystem 3 optisch aktiv und auch die Zwischenschicht 2 und der Träger 1.

Das erfindungsgemäße optisch wirksame Mehrschichtsystem 3 wirkt erfindungsgemäß als eine Lichtfalle, wobei in dem Wellenlängenbereich $\lambda$, in dem herkömmliche Absorbermaterialien den beim Übergang zu höheren Wellenlängen $\lambda$ hin erfolgenden Sprung SL der Reflektivität $\varepsilon$ bereits hinter sich gelassen haben, erfindungsgemäß noch eine vergleichsweise hohe Absorption $\alpha$ erfolgt, wie dies durch die Fläche F in Fig. 3 zum Ausdruck kommt.

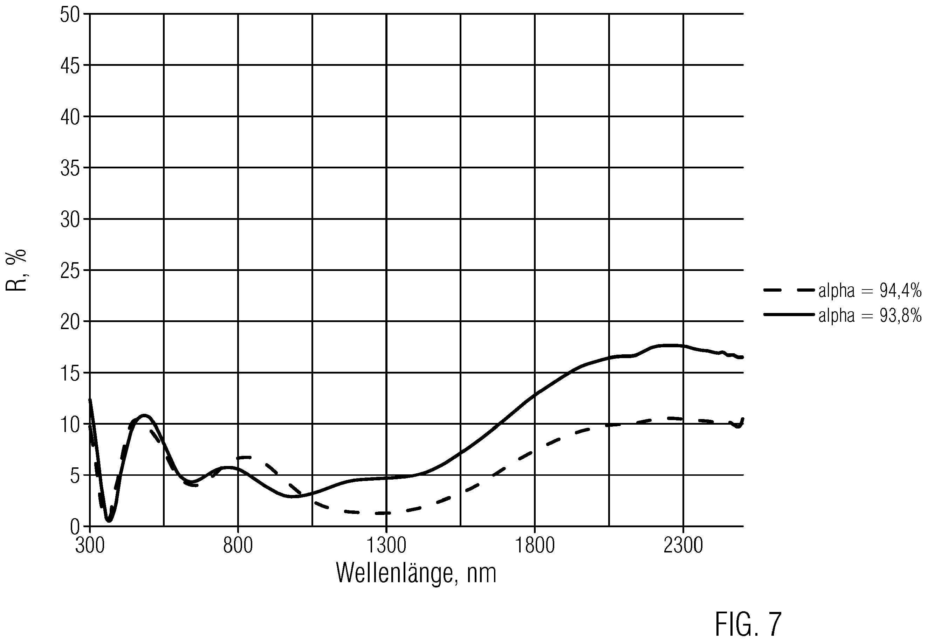

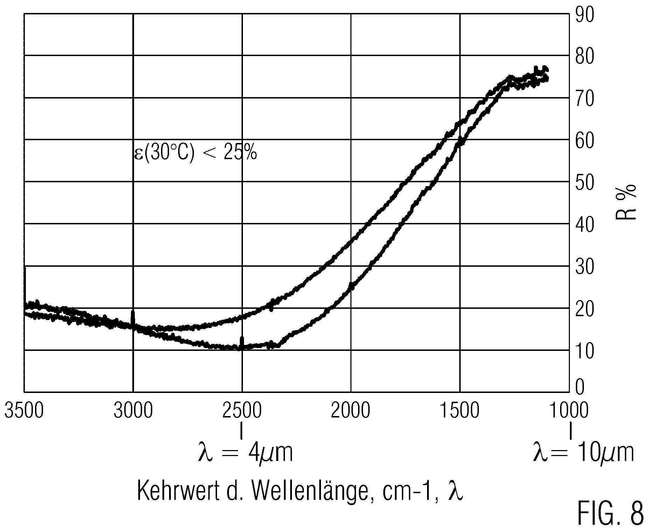

Durch Fig. 7 bis 10 werden exemplarisch Untersuchungsergebnisse visualisiert, die mit dem gemäß Fig. 6 aufgebauten erfindungsgemäßen Verbundmaterial V gewonnen wurden. Wie bereits erwähnt, handelt es sich dabei zunächst um diagrammatische Darstellungen des wellenlängenabhängigen Reflexionsgrades R für den solaren und infraroten Bereich von zwei bevorzugten Ausführungen eines Verbundmaterials V, (Fig. 7 und 8) ("Position 1" und "Position 2"). Die Ergebnisse repräsentieren jeweils Mittelwerte von an mindestens drei unterschiedlichen Stellen der Proben vorgenommenen Messungen.

Zur Bestimmung der solaren Absorption wurde unter Beachtung der o. g. Norm ein UV-Vis-Spektrometer "Lambda 950" der Fa. Perkin Eimer eingesetzt, wobei als Referenz für Solarabsorber ein rückführbarer Spektralon-Standard diente. Zur Bestimmung der thermischen Emission wurde unter Beachtung der o. g. Norm ein FT-IR-Spektrometer "Spektrum 400" mit goldbeschichteter Integrationskugel der Fa. PIKE eingesetzt, wobei die Referenz für solare Absorber ein rückführbarer Goldspiegel war. Der Einsatz von zertifizierten Referenzproben bei diesen Messungen sichert dabei eine hohe Reproduzierbarkeit.

Speziell zu Fig. 8 ist dabei zu bemerken, dass dort aufgrund der geräteinternen Fourier-Transformation der Kehrwert der Wellenlänge $\lambda$ auf der Abszisse aufgetragen ist, wobei die in cm$^{-1}$ angegebenen, links stehenden größeren Zahlenwerte kleineren Wellenlängenwerten $\lambda$ entsprechen, als die in cm$^{-1}$ angegebenen, rechts stehenden größeren Werte, z. B. entspricht der Wert von 2500 cm$^{-1}$ einer Wellenlänge von 4 $\mu$m und der Wert von 1000 cm$^{-1}$ einer Wellenlänge von 10 $\mu$m. Vorteilhafterweise im Sinne der Darstellung ist die Abszissenachse durch diesen Sachverhalt im längerwelligen IR-Bereich, wo die Änderungen des Reflexionsgrades R nur noch gering sind, hyperbolisch gestaucht. Die Versuchsergebnisse koinzidieren - nahezu mit Kongruenz - mit der idealisierten Kurvendarstellung in Fig. 3.

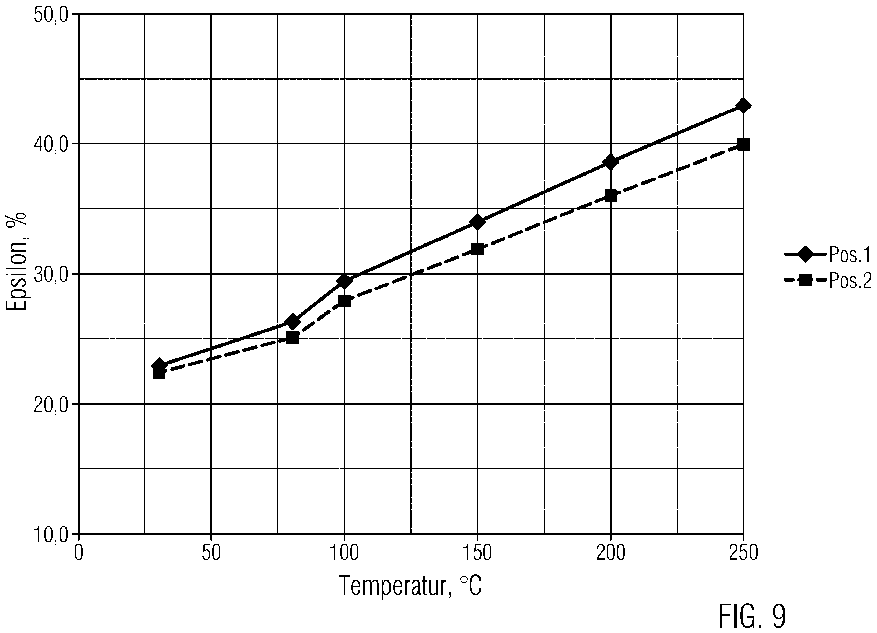

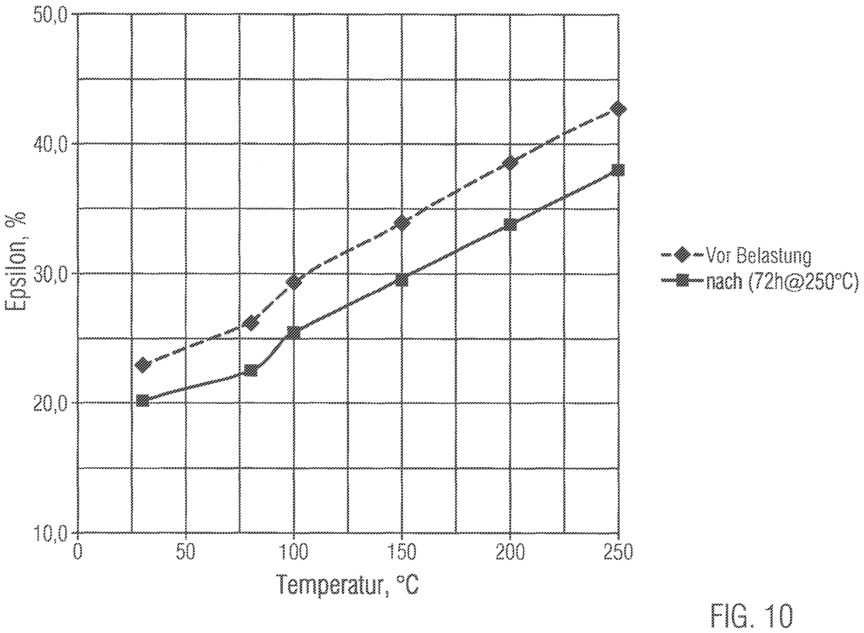

Außerdem ist exemplarisch der Reflexionsgrad R eines erfindungsgemäßen Verbundmaterials V in Abhängigkeit von der Temperatur einmal in Fig. 9 als typischer Verlauf der beiden bevorzugten Ausführungen und zum Zweiten in Fig. 10 vor und nach einer Alterung dargestellt.

In Relation zu Fig. 9 und 10 zeigt die nachstehende Tabelle 1 die Einzelergebnisse, die sich aus dem gemessenen infrarot-Reflexionsspektrum eines erfindungsgemäßen Verbundmaterials V ergaben. Mit "Position 1" ist dabei ein erfindungsgemäßes Verbundmaterial 7 bezeichnet, bei dem das Chrom der metallischen Schicht 6 eine Dicke D6 von 5,7 nm hatte, während diese Dicke D6 für die "Position 2" bei 10 bis 12 nm lag. Die Messungen erfolgten bei Raumtemperatur (25 °C), wobei die für die Performance eines Absorbers relevanten Werte zwischen 30 °C und 80 °C sowie die darüber liegenden für die Stagnation relevanten Werte entsprechend dem Planck'schen Strahlungsgesetz kalkuliert wurden. Die Werte für 30 °C korrespondieren dabei mit der grafischen Darstellung in Fig. 9.

Tabelle 1: Emissionsgrad $\varepsilon$ in Prozent in Abhängigkeit von der Temperatur bei einem Absorptionsgrad $\alpha$ im Bereich von 93,6 % bis 94,7 %

| Position | 30 °C | 80 °C | 100 °C | 150 °C | 200 °C | 250 °C |
|---|---|---|---|---|---|---|
| 1 | 23.0 | 26.3 | 29.4 | 34.0 | 38.5 | 42.7 |
| 2 | 22.6 | 25.1 | 27.9 | 32.0 | 36.0 | 39.8 |

Für den Emissionsgrad $\varepsilon$ und den Absorptionsgrad $\alpha$ sind dabei folgende Formeln von Bedeutung:

$$\varepsilon = \frac{\int_{2,5\mu m}^{25\mu m}(1 - R(\lambda)) * I_{BB}(\lambda)\, d\lambda}{\int_0^\infty I_{BB}(\lambda)\, d\lambda}$$

und

$$\alpha = \frac{\int_{300nm}^{2500\,nm}(1 - R(\lambda)) * I_{AM\,1,5}(\lambda)\, d\lambda}{\int_{300\,nm}^{2500\,nm} I_{AM\,1,5}(\lambda)\, d\lambda}$$

Darin sind $R(\lambda)$ der wellenlängenabhängige Reflexionsgrad, $I_{BB}(\lambda)$ die wellenlängenabhängige Intensität der Strahlung eines "schwarzen Körpers" und $I_{AM\,1,5}(\lambda)$ die Intensität des Sonnenspektrums, welches naturgemäß ebenfalls wellenlängenabhängig ist - und, wie oben beschrieben, nach der ASTM G173-03 genormt ist.

Das erfindungsgemäße Verbundmaterial V wurde unter zwei Temperatur-Regimes belastet, und zwar einmal 300 Stunden bei 200 °C und einmal 72 Stunden bei 250 °C. Nach den Belastungen wurden die Reflexionsspektren gemessen und daraus die Alpha- und die Epsilon-Werte errechnet.

In der nachfolgenden Tabelle 2 sind diesbezüglich die Werte der Absorption $\alpha$ vor und nach der Temperaturbelastung sowie die bei der Temperaturbelastung aufgetretene Änderung $\Delta\alpha$ enthalten. Die Werte vor der Temperaturbelastung ("Position 1": $\alpha$ = 93,8 %; "Position 2": $\alpha$ = 94,4 % korrespondieren dabei mit der grafischen Darstellung in Fig. 7.

Tabelle 2: Solarer Absorptionsgrad $\alpha$ vor und nach Temperaturbelastung

| Position | Alpha in Prozent | | | Delta-Alpha in Prozent | |
|---|---|---|---|---|---|
| | vorher | -300 h@200 °C | 72 h@250 °C | 300 h@200 °C | 72 h@250 °C |
| 1 | 93.8 | 93.5 | 93.2 | -0.3 | -0.5 |
| 2 | 94.5 | 94.9 | 94.5 | 0.3 | 0.0 |

Die Tabellen 3 und 4 geben die sich nach der Temperaturbelastung einstellenden Reflexionswerte $\varepsilon$ für die in Tabelle 1 enthaltenen Werte wieder und korrespondieren mit der Grafik in Fig. 10 für die dortige "Position 2".

Tabelle 3: Emissionsgrad $\varepsilon$ in Prozent nach 300 Stunden bei 200 °C

| Position | 30 °C | 80 °C | 100 °C | 150 °C | 200 °C | 250 °C |
|---|---|---|---|---|---|---|
| 1t | 22.5 | 25.4 | 28.3 | 32.7 | 37.0 | 41.2 |
| 2 | 21.7 | 24.0 | 26.7 | 30.6 | 34.5 | 38.3 |

Tabelle 4: Emissionsgrad $\varepsilon$ in Prozent nach 72 Stunden bei 250 °C

| Position | 30 °C | 80 °C | 100 °C | 150 °C | 200 °C | 250 °C |
|---|---|---|---|---|---|---|
| 1 | 20.9 | 23.6 | 26.5 | 30.7 | 35.1 | 39.2 |
| 2 | 22.2 | 24.3 | 26.9 | 30.6 | 34.4 | 38.1 |

Aus den Tabellen 1 bis 4 sowie aus den korrespondierenden Grafiken ist zu entnehmen, dass sich vorteilhafterweise die optischen Eigenschaften des erfindungsgemäßen Verbundmaterials V infolge der Temperaturbelastung kaum änderten.

Die Tabelle 5 zeigt enthält die sich mit den gemessenen Werten aus einer vergleichenden Modellrechnung ergebenden Stagnationstemperaturen $T_{st}$ und die Wirkungsgrade $\eta$ eines typischen Kollektors mit einem erfindungsgemäßen Verbundmaterial V im Vergleich mit dem vorgenannten Material mirotherm®.

Tabelle 5: Stagnationstemperaturen $T_{st}$ und Wirkungsgrade $\eta$ im Vergleich (Simulation)

| Kollektoraustrittstemperatur | mirotherm® | Erfindung |
|---|---|---|
| | Wirkungsgrad $\eta$ | |
| 35 °C | 0.77 | 0.75 |
| 50 °C | 0.71 | 0.68 |
| 75 °C | 0.60 | 0.56 |
| | Tst = 210 °C | Tst = 163 °C |

Es ist daraus leicht ersichtlich, dass einer vorteilhaft großen Absenkung der Stagnationstemperatur $T_s$ von 57 ° C durch das erfindungsgemäße Verbundmaterial V ein nur sehr geringer - unterproportionaler - Leistungsabfall von maximal nur 0.04 Punkten bei einer Kollektoraustrittstemperatur von 75 °C gegenüber steht.

**Bezugszeichen**

| | |
|---|---|
| 1 | Träger |
| 2 | Zwischenschicht |
| 3 | optisches Mehrschichtsystem |
| 4 | obere Schicht von 3 |
| 5 | lichtabsorbierende Schicht von 3 |
| 6 | metallische Schicht |
| A | Einfalls- und Ausfallstrahl in 5 (Fig. 7) |
| AM 1,5 | genormtes Sonnenspektrum - Fig. 1, 2 |
| B1 | Reflexionsstrahl von 6/2 (Fig. 7) |
| B2 | Reflexionsstrahl von 2/1 (Fig. 7) |
| C1 | Strahl aus Superposition von A und B1 (Fig. 7) |
| C2 | Strahl aus Superposition von C1 und B2 (Fig. 7) |
| BB | Kurve: "schwarzer Strahler (black body)" - Fig. 1, 2 |
| D | (Gesamt-)Dicke von V |
| D1 | Dicke von 1 |
| D2 | Dicke von 2 |
| D4 | Dicke von 4 |
| D5 | Dicke von 5 |
| D6 | Dicke von 6 |
| DI | destruktive Interferenz (Fig. 7) |
| KI | konstruktive Interferenz (Fig. 7) |
| $n_2$ | Brechungsindex von 2 |
| $n_5$ | Brechungsindex von 5 |
| $n_6$ | Brechungsindex von 6 |
| IA | Kurve Idealer Absorber - Fig. 1 |
| R | Reflexionsgrad |
| SL | Sprungwellenlänge |
| T | Temperatur |
| V | Verbundmaterial |
| | |
| $\varepsilon$ | Emissionsgrad |
| $\lambda$ | Wellenlänge |
| $\Theta1, \Theta2, \Theta3$ | Strahlungswinkel (Fig. 7) |

**Patentansprüche**

**1.** Verbundmaterial (V) umfassend einen aus Aluminium bestehenden Träger (1), mit einer auf einer Seite auf dem Träger (1) befindlichen, aus Aluminiumoxid bestehenden Zwischenschicht (2) und mit einem auf die Zwischenschicht (2) aufgebrachten optisch wirksamen Mehrschichtsystem (3), welches mindestens zwei dielektrische und/oder oxidische Schichten (4, 5), nämlich eine obere Schicht (4) und eine darunter liegende lichtabsorbierende Schicht (5), umfasst, wobei die obere Schicht (4) eine dielektrische Schicht mit einem Brechungsindex n ≤ 2,0 ist, und wobei unmittelbar auf der Zwischenschicht (2) unter den mindestens zwei dielektrischen und/oder oxidischen Schichten (4, 5) eine metallische Schicht (6) angeordnet ist,
wobei die Zwischenschicht (2) und das optisch wirksame Mehrschichtsystem (3) hinsichtlich ihrer optischen Eigenschaften derart ausgewählt und die Schichten (2, 4, 5, 6) derart bemessen sind, dass bei einer solaren Absorption ($\alpha$) von mindestens 92 Prozent die solare Strahlung in einem Wellenlängenbereich ($\lambda$) von 1500 nm bis 5000 nm zu nicht mehr als 20 Prozent bis 35 Prozent und in einem Wellenlängenbereich ($\lambda$) von 5000 nm bis 10000 nm zu 25 Prozent bis 90 Prozent reflektiert wird, wobei in dem Wellenlängenbereich ($\lambda$) von 5000 nm bis 10000 nm über den ganzen Wellenlängenbereich ($\lambda$) hinweg ein stetiger Anstieg eines von Wellenlängen abhängigen Reflexionsgrades (R) des Verbundmaterials (V) mit der Wellenlänge ($\lambda$) erfolgt, wobei die metallische Schicht (6) eine Dicke (D6) im Bereich von 3 nm bis 14 nm aufweist und zumindest in einem Wellenlängenbereich von 300 nm bis 2500 nm semitransparent ist, d. h. einen Transmissionsgrad im Bereich von 30 Prozent bis 80 Prozent aufweist, wobei die Zwischenschicht (2) auf dem Träger (1) eine Dicke ($D_2$) im Bereich von 100 nm bis 250 nm aufweist, und wobei die lichtabsorbierende Schicht (5) des optischen Mehrschichtsystems (3) eine Dicke (D5) von mehr als 50 nm und maximal 1 $\mu$m aufweist.

2. Verbundmaterial (V) nach Anspruch 1,
**dadurch gekennzeichnet, dass** die Zwischenschicht (2) und das optisch wirksame Mehrschichtsystem (3) hinsichtlich ihrer optischen Eigenschaften, insbesondere hinsichtlich der Refraktion und Extinktion der Schichten (2, 4, 5, 6), derart ausgewählt und die Schichten (2, 4, 5, 6) derart bemessen sind, dass einfallende Strahlung in einem Wellenlängenbereich ($\lambda$) größer/gleich 5200 nm zu mindestens 30 Prozent, vorzugsweise zu mindesten 40 Prozent, und in einem Wellenlängenbereich ($\lambda$) größer/gleich 6500 nm zu mindestens 55 Prozent, vorzugsweise zu mindestens 60 Prozent, reflektiert wird.

3. Verbundmaterial (V) nach Anspruch 1 oder 2,
**dadurch gekennzeichnet, dass** die metallische Schicht (6) im Bereich von 360 nm bis 1800 nm, semitransparent ist, d. h. insbesondere einen Transmissionsgrad im Bereich von 30 Prozent bis 80 Prozent, vorzugsweise von 40 Prozent bis 60 Prozent, aufweist.

4. Verbundmaterial (V) nach einem der Ansprüche 1 bis 3,
**dadurch gekennzeichnet, dass** die metallische Schicht (6) aus einem Nichtedelmetall, insbesondere aus einem Übergangsmetall, wie bevorzugt aus Titan oder aus Chrom oder aus einem Seltenerdmetall, oder aus einer Legierung derselben besteht.

5. Verbundmaterial (V) nach einem der Ansprüche 1 bis 4,
**dadurch gekennzeichnet, dass** die metallische Schicht (6) eine Dicke (D6) im Bereich von 5 nm bis 12 nm aufweist und insbesondere einlagig ausgebildet ist.

6. Verbundmaterial (V) nach einem der Ansprüche 1 bis 5,
**dadurch gekennzeichnet, dass** die Zwischenschicht (2) auf dem Träger (1) eine aus Aluminiumoxid bestehende Schicht ist, die vorzugsweise aus anodisch oxidiertem oder elektrolytisch geglänztem und anodisch oxidiertem Trägermaterial gebildet ist.

7. Verbundmaterial (V) nach einem der Ansprüche 1 bis 6,
**dadurch gekennzeichnet, dass** die Zwischenschicht (2) eine Dicke ($D_2$) im Bereich von 130 nm bis 180 nm aufweist.

8. Verbundmaterial (V) nach einem der Ansprüche 1 bis 7,
**dadurch gekennzeichnet, dass** der Brechungsindex ($n_2$) der Zwischenschicht (2) im solaren Wellenlängenbereich und gegebenenfalls auch in einem Wellenlängenbereich ($\lambda$) von 1500 nm bis 5000 nm kleiner ist als der Brechungsindex ($n_6$) der metallischen Schicht (6), wobei die Materialien der Zwischenschicht (2) und der metallischen Schicht (6) vorzugsweise derart ausgewählt sind, dass ein Grenzwinkel der Totalreflexion der solaren Strahlung an der Zwischenschicht (2) im Bereich von 35° bis 63° liegt.

9. Verbundmaterial (V) nach einem der Ansprüche 1 bis 8,
**gekennzeichnet durch** einen mittleren Anstieg des Reflexionsgrades über der Wellenlänge ($\Delta R / \Delta \lambda$) im Wellen-

längenbereich ($\lambda$) von 4200 nm bis 6600 nm, vorzugsweise im Bereich von 5000 nm bis 6200 nm, im Bereich von 21 Prozent pro $\mu$m bis 25 Prozent pro $\mu$m.

**10.** Verbundmaterial (V) nach einem der Ansprüche 1 bis 9,
**gekennzeichnet durch** einen mittleren Anstieg des Reflexionsgrades über der Wellenlänge ($\Delta$R / $\Delta\lambda$) im Wellenlängenbereich ($\lambda$) von 6200 nm bis 10000 nm, vorzugsweise im Bereich von 6600 nm bis 9000 nm, von 5 Prozent pro $\mu$m bis 10 Prozent pro $\mu$m.

**11.** Verbundmaterial (V) nach einem der Ansprüche 1 bis 10,
**dadurch gekennzeichnet, dass** die lichtabsorbierende Schicht (5) des optischen Mehrschichtsystems (3) ein Titan-Aluminium-Mischoxid und/oder ein Titan-Aluminium-Mischnitrid und/oder ein Titan-Aluminium-Mischoxinitrid der chemischen Zusammensetzung $TiAl_qO_xN_y$ enthält, wobei die Indizes q, x und y jeweils ein stöchiometrisches oder nichtstöchiometrisches Verhältnis bezeichnen, oder dass die lichtabsorbierende Schicht (5) des optischen Mehrschichtsystems (3) Chromoxid der chemischen Zusammensetzung $CrO_z$ und/oder Chromnitrid der chemischen Zusammensetzung $CrN_v$ und/oder Chromcarbid $CrC_p$ und/oder Chromoxinitrid der chemischen Zusammensetzung $CrO_zN_v$ und/oder Chromoxicarbid $CrO_zC_p$ und/oder Chromoxicarbonitrid $CrO_zC_pN_v$ enthält, wobei die Indizes z, v und p jeweils ein stöchiometrisches oder nichtstöchiometrisches Verhältnis bezeichnen, wobei die stöchiometrischen oder nichtstöchiometrischen Verhältnisse p, q, v, x, y, z im Bereich 0 < p und/oder q und/oder v und/oder x und/oder y und/oder z < 3 liegen, wobei die lichtabsorbierende Schicht (5) des optischen Mehrschichtsystems (3) vorzugsweise eine Dicke (D5) im Bereich von 70 nm bis 350 nm, besonders bevorzugt im Bereich von 200 nm bis 270 nm, aufweist.

**12.** Verbundmaterial (V) nach einem der Ansprüche 1 bis 11,
**dadurch gekennzeichnet, dass** die obere Schicht (4) des optischen Mehrschichtsystems (3) eine siliciumoxidische Schicht der chemischen Zusammensetzung $SiO_w$ ist, wobei der Index w ein stöchiometrisches oder nichtstöchiometrisches Verhältnis bezeichnet, welches im Bereich $1 \leq w \leq 2$ liegt.

**13.** Verbundmaterial (V) nach einem der Ansprüche 1 bis 12,
**dadurch gekennzeichnet, dass** die mindestens zwei dielektrischen und/oder oxidischen Schichten (4, 5) des optischen Mehrschichtsystems (3), die metallische Schicht (6) und/oder die Zwischenschicht (2) Sputterschichten, CVD- oder PECVD-Schichten oder durch Verdampfen erzeugte Schichten sind, wobei insbesondere die Zwischenschicht (2) und/oder das optische Mehrschichtsystem (3) aus in Vakuumfolge in einem kontinuierlichen Verfahren aufgetragenen Schichten besteht.

**14.** Verbundmaterial (V) nach einem der Ansprüche 1 bis 13,
**dadurch gekennzeichnet, dass** die obere Schicht (4) des optischen Mehrschichtsystems (3) eine Dicke (D4) von maximal 500 nm aufweist, wobei diese Dicke (D4) insbesondere im Bereich von 60 nm bis 250 nm, bevorzugt im Bereich von 100 nm bis 150 nm, liegt.

**15.** Verbundmaterial (V) nach einem der Ansprüche 1 bis 14, vorzugsweise nach Anspruch 11 oder 12,
**dadurch gekennzeichnet, dass** Schichten (2, 4, 5) des optisch wirksamen Mehrschichtsystems (3), vorzugsweise mindestens die lichtabsorbierende Schicht (5), als Gradientenschicht(en) ausgebildet ist/sind, in der/denen sich insbesondere mindestens einer der Indizes q, v, w, x, y oder z und/oder der Anteil - vorzugsweise angegeben in Atomprozent - eines in der jeweiligen Schicht (2, 4, 5) enthaltenen, nicht indizierten Elements kontinuierlich ändert.

**Claims**

**1.** Composite material (V) comprising a carrier (1) consisting of aluminium, having an intermediate layer (2) situated on one side of the carrier (1) and consisting of aluminium oxide, and having an optically effective multilayer system (3) applied on the intermediate layer (2) and comprising at least two dielectric and/or oxidic layers (4, 5), namely an upper layer (4) and an underlying light-absorbing layer (5), wherein the upper layer (4) is a dielectric layer having a refractive index $n \leq 2.0$, and wherein a metallic layer (6) is arranged directly on the intermediate layer (2) below the at least two dielectric and/or oxidic layers (4, 5), wherein the intermediate layer (2) and the optically effective multilayer system (3) are selected with regard to their optical properties and the layers (2, 4, 5, 6) are dimensioned in such a way that given a solar absorption ($\alpha$) of at least 92 percent, not more than 20 percent to 35 percent of the solar radiation in a wavelength range ($\lambda$) of 1500 nm to 5000 nm is reflected and 25 percent to 90 percent of the solar radiation in a wavelength range ($\lambda$) of 5000 nm to 10000 nm is reflected, wherein in the wavelength range ($\lambda$) of 5000 nm to 10000 nm across the entire wavelength range ($\lambda$), a continuous rise in a wavelength-dependent reflectance (R) of the composite material (V) with the wavelength ($\lambda$) takes place, wherein the metallic layer (6) has a thickness (D6) in the range of 3 nm to 14 nm and is semi-transparent at least in a wavelength range of 300 nm to 2500 nm, i.e. has a transmittance in the range of 30 percent to 80 percent, wherein the intermediate layer (2) on the carrier (1) has a thickness ($D_2$) in the range of 100 nm to 250 nm, and wherein the light-absorbing layer (5) of the optical multilayer system (3) has a thickness (D5) of more than 50 nm and a maximum of 1 $\mu$m.

2. Composite material (V) according to Claim 1,
**characterized in that** the intermediate layer (2) and the optically effective multilayer system (3) are selected with regard to their optical properties, in particular with regard to the refraction and extinction of the layers (2, 4, 5, 6), and the layers (2, 4, 5, 6) are dimensioned in such a way that at least 30 percent, preferably at least 40 percent, of incident radiation in a wavelength range ($\lambda$) of greater than/equal to 5200 nm is reflected and at least 55 percent, preferably at least 60 percent, of incident radiation in a wavelength range ($\lambda$) of greater than/equal to 6500 nm is reflected.

3. Composite material (V) according to Claim 1 or 2,
**characterized in that** the metallic layer (6) is semi-transparent in the range of 360 nm to 1800 nm, i.e. in particular has a transmittance in the range of 30 percent to 80 percent, preferably of 40 percent to 60 percent.

4. Composite material (V) according to any of Claims 1 to 3,
**characterized in that** the metallic layer (6) consists of a non-noble metal, in particular of a transition metal, such as preferably of titanium or of chromium or of a rare earth metal, or of an alloy thereof.

5. Composite material (V) according to any of Claims 1 to 4,
**characterized in that** the metallic layer (6) has a thickness (D6) in the range of 5 nm to 12 nm, and is configured in particular in monolayer fashion.

6. Composite material (V) according to any of Claims 1 to 5,
**characterized in that** the intermediate layer (2) on the carrier (1) is a layer which consists of aluminium oxide and which is preferably formed from anodically oxidized or electrolytically brightened and anodically oxidized carrier material.

7. Composite material (V) according to any of Claims 1 to 6,
**characterized in that** the intermediate layer (2) has a thickness ($D_2$) in the range of 130 nm to 180 nm.

8. Composite material (V) according to any of Claims 1 to 7,
**characterized in that** the refractive index ($n_2$) of the intermediate layer (2) in the solar wavelength range and, if appropriate, also in a wavelength range ($\lambda$) of 1500 nm to 5000 nm is less than the refractive index ($n_6$) of the metallic layer (6), wherein the materials of the intermediate layer (2) and of the metallic layer (6) are preferably selected in such a way that a critical angle of total internal reflection of the solar radiation at the intermediate layer (2) lies in the range of 35° to 63°.

9. Composite material (V) according to any of Claims 1 to 8,
**characterized by** an average rise in reflectance versus wavelength ($\Delta R/\Delta\lambda$) in the wavelength range ($\lambda$) of 4200 nm to 6600 nm, preferably in the range of 5000 nm to 6200 nm, in the range of 21 percent per $\mu$m to 25 percent per $\mu$m.

10. Composite material (V) according to any of Claims 1 to 9,
**characterized by** an average rise in reflectance versus wavelength ($\Delta R/\Delta\lambda$) in the wavelength range ($\lambda$) of 6200 nm to 10000 nm, preferably in the range of 6600 nm to 9000 nm of 5 percent per $\mu$m to 10 percent per $\mu$m.

11. Composite material (V) according to any of Claims 1 to 10,
**characterized in that** the light-absorbing layer (5) of the optical multilayer system (3) contains a titanium-aluminium mixed oxide and/or a titanium-aluminium mixed nitride and/or a titanium-aluminium mixed oxynitride having the chemical composition $TiAl_qO_xN_y$, wherein the indices q, x and y respectively denote a stoichiometric or non-stoichiometric ratio, or **in that** the light-absorbing layer (5) of the optical multilayer system (3) contains chromium oxide having the chemical composition $CrO_z$ and/or chromium nitride having the chemical composition $CrN_v$ and/or chromium carbide $CrC_p$ and/or chromium oxynitride having the chemical composition $CrO_zN_v$ and/or chromium oxycarbide $CrO_zC_p$ and/or chromium oxycarbonitride $CrO_zC_pN_v$, wherein the indices z, v and p respectively denote a stoichiometric or non-stoichiometric ratio, wherein the stoichiometric or non-stoichiometric ratios p, q, v, x, y, z lie in the range 0 < p and/or q and/or v and/or x and/or y and/or z < 3, wherein the light-absorbing layer (5) of the optical multilayer system (3) preferably has a thickness (D5) in the range of 70 nm to 350 nm, particularly preferably in the range of 200 nm to 270 nm.

12. Composite material (V) according to any of Claims 1 to 11,
**characterized in that** the upper layer (4) of the optical multilayer system (3) is a silicon-oxidic layer having the chemical composition $SiO_w$, wherein the index w denotes a stoichiometric or non-stoichiometric ratio that lies in the range $1 \leq w \leq 2$.

13. Composite material (V) according to any of Claims 1 to 12,
**characterized in that** the at least two dielectric and/or oxidic layers (4, 5) of the optical multilayer system (3), the metallic layer (6) and/or the intermediate layer (2) are sputtering layers, CVD or PECVD layers or layers produced by evaporation, wherein in particular the intermediate layer (2) and/or the optical multilayer system (3) consist(s) of layers applied in vacuum succession in a continuous method.

14. Composite material (V) according to any of Claims 1 to 13,
**characterized in that** the upper layer (4) of the optical multilayer system (3) has a thickness (D4) of a maximum of 500 nm, wherein said thickness (D4) lies in particular in the range of 60 nm to 250 nm, preferably in the range of 100 nm to 150 nm.

15. Composite material (V) according to any of Claims 1 to 14, preferably according to Claim 11 or 12,
**characterized in that** layers (2, 4, 5) of the optically effective multilayer system (3), preferably at least the light-absorbing layer (5), are/is configured as gradient layer(s) in which in particular at least one of the indices q, v, w, x, y or z and/or the proportion - preferably specified in atom percent - of a non-indexed element contained in the respective layer (2, 4, 5) change(s) continuously.


**Revendications**

1. Matériau composite (V) comprenant un support (1) constitué d'aluminium, avec une couche intermédiaire (2) constituée d'oxyde d'aluminium se trouvant sur un côté du support (1) et avec un système multicouche optiquement actif (3) appliqué sur la couche intermédiaire (2), qui comprend au moins deux couches diélectriques et/ou oxydiques (4, 5), à savoir une couche supérieure (4) et une couche absorbant la lumière (5) située en dessous, la couche supérieure (4) étant une couche diélectrique ayant un indice de réfraction $n \leq 2,0$, et une couche métallique (6) étant agencée directement sur la couche intermédiaire (2) sous les au moins deux couches diélectriques et/ou oxydiques (4, 5), la couche intermédiaire (2) et le système multicouche optiquement actif (3) étant choisis au regard de leurs propriétés optiques et les couches (2, 4, 5, 6) étant dimensionnées de telle sorte que, pour une absorption solaire ($\alpha$) d'au moins 92 pour cent, le rayonnement solaire n'est pas réfléchi à plus de 20 pour cent à 35 pour cent dans une plage de longueurs d'onde ($\lambda$) allant de 1 500 nm à 5 000 nm et est réfléchi à 25 pour cent à 90 pour cent dans une plage de longueurs d'onde ($\lambda$) allant de 5 000 nm à 10 000 nm, une augmentation constante d'un degré de réflexion (R) du matériau composite (V) dépendant des longueurs d'onde avec la longueur d'onde ($\lambda$) ayant lieu sur toute la plage de longueurs d'onde ($\lambda$) dans la plage de longueurs d'onde ($\lambda$) allant de 5 000 nm à 10 000 nm, la couche métallique (6) présentant une épaisseur (D6) dans la plage allant de 3 nm à 14 nm et étant semi-transparente au moins dans une plage de longueurs d'onde allant de 300 nm à 2 500 nm, c'est-à-dire présentant un degré de transmission dans la plage allant de 30 pour cent à 80 pour cent, la couche intermédiaire (2) sur le support (1) présentant une épaisseur ($D_2$) dans la plage allant de 100 nm à 250 nm, et la couche absorbant la lumière (5) du système multicouche optique (3) présentant une épaisseur (D5) de plus de 50 nm et d'au maximum 1 $\mu$m.

2. Matériau composite (V) selon la revendication 1, **caractérisé en ce que** la couche intermédiaire (2) et le système multicouche optique actif (3) sont choisis au regard de leurs propriétés optiques, notamment au regard de la réfraction et de l'extinction des couches (2, 4, 5, 6), et les couches (2, 4, 5, 6) sont dimensionnées de telle sorte qu'un rayonnement incident est réfléchi à au moins 30 pour cent, de préférence à au moins 40 pour cent, dans une plage de longueurs d'onde ($\lambda$) supérieure ou égale à 5 200 nm et à au moins 55 pour cent, de préférence à au moins 60 pour cent, dans une plage de longueurs d'onde (À) supérieure ou égale à 6 500 nm.

3. Matériau composite (V) selon la revendication 1 ou 2, **caractérisé en ce que** la couche métallique (6) est semi-transparente dans la plage allant de 360 nm à 1 800 nm, c.-à-d. présente notamment un degré de transmission dans la plage allant de 30 pour cent à 80 pour cent, de préférence de 40 pour cent à 60 pour cent.

4. Matériau composite (V) selon l'une quelconque des revendications 1 à 3, **caractérisé en ce que** la couche métallique (6) est constituée d'un métal non noble, notamment d'un métal de transition, tel que de préférence de titane ou de chrome ou d'un métal des terres rares, ou d'un alliage de ceux-ci.

5. Matériau composite (V) selon l'une quelconque des revendications 1 à 4, **caractérisé en ce que** la couche métallique (6) présente une épaisseur (D6) dans la plage allant de 5 nm à 12 nm et est notamment configurée en une seule couche.

6. Matériau composite (V) selon l'une quelconque des revendications 1 à 5, **caractérisé en ce que** la couche intermédiaire (2) sur le support (1) est une couche constituée d'oxyde d'aluminium, qui est de préférence formée d'un matériau support oxydé anodiquement ou poli électrolytiquement et oxydé anodiquement.

7. Matériau composite (V) selon l'une quelconque des revendications 1 à 6, **caractérisé en ce que** la couche intermédiaire (2) présente une épaisseur ($D_2$) dans la plage allant de 130 nm à 180 nm.

8. Matériau composite (V) selon l'une quelconque des revendications 1 à 7, **caractérisé en ce que** l'indice de réfraction ($n_2$) de la couche intermédiaire (2) est inférieur à l'indice de réfraction ($n_6$) de la couche métallique (6) dans la plage de longueurs d'onde solaires et éventuellement également dans une plage de longueurs d'onde ($\lambda$) allant de 1 500 nm à 5 000 nm, les matériaux de la couche intermédiaire (2) et de la couche métallique (6) étant de préférence choisis de telle sorte qu'un angle limite de réflexion totale du rayonnement solaire sur la couche intermédiaire (2) se situe dans la plage allant de 35° à 63°.

9. Matériau composite (V) selon l'une quelconque des revendications 1 à 8, **caractérisé par** une augmentation moyenne du degré de réflexion sur la longueur d'onde ($\Delta R/\Delta\lambda$) dans la plage de longueurs d'onde ($\lambda$) allant de 4 200 nm à 6 600 nm, de préférence dans la plage allant de 5 000 nm à 6 200 nm, dans la plage allant de 21 pour cent par $\mu$m à 25 pour cent par $\mu$m.

10. Matériau composite (V) selon l'une quelconque des revendications 1 à 9, **caractérisé par** une augmentation moyenne du degré de réflexion sur la longueur d'onde ($\Delta R/\Delta\lambda$) dans la plage de longueurs d'onde ($\lambda$) allant de 6 200 nm à 10 000 nm, de préférence dans la plage allant de 6 600 nm à 9 000 nm, de 5 pour cent par $\mu$m à 10 pour cent par $\mu$m.

11. Matériau composite (V) selon l'une quelconque des revendications 1 à 10, **caractérisé en ce que** la couche absorbant la lumière (5) du système multicouche optique (3) contient un oxyde mixte de titane et d'aluminium et/ou un nitrure mixte de titane et d'aluminium et/ou un oxynitrure mixte de titane et d'aluminium de composition chimique $TiAl_qO_xN_y$, les indices q, x et y désignant respectivement un rapport stœchiométrique ou non stœchiométrique, ou **en ce que** la couche absorbant la lumière (5) du système multicouche optique (3) contient de l'oxyde de chrome de composition chimique $CrO_z$ et/ou du nitrure de chrome de composition chimique $CrN_v$ et/ou du carbure de chrome $CrC_p$ et/ou de l'oxynitrure de chrome de composition chimique $CrO_zN_v$ et/ou de l'oxycarbure de chrome $CrO_zC_p$ et/ou de l'oxycarbonitrure de chrome $CrO_zC_pN_v$, les indices z, v et p désignant chacun un rapport stœchiométrique ou non stœchiométrique, les rapports stœchiométriques ou non stœchiométriques p, q, v, x, y, z se situant dans la plage $0 < p$ et/ou q et/ou v et/ou x et/ou y et/ou $z < 3$, la couche absorbant la lumière (5) du système multicouche optique (3) présentant de préférence une épaisseur (D5) dans la plage allant de 70 nm à 350 nm, de manière particulièrement préférée dans la plage allant de 200 nm à 270 nm.

12. Matériau composite (V) selon l'une quelconque des revendications 1 à 11, **caractérisé en ce que** la couche supérieure (4) du système multicouche optique (3) est une couche d'oxyde de silicium de composition chimique $SiO_w$, l'indice w désignant un rapport stœchiométrique ou non stœchiométrique qui se situe dans la plage de $1 \leq w \leq 2$.

13. Matériau composite (V) selon l'une quelconque des revendications 1 à 12, **caractérisé en ce que** les au moins deux couches diélectriques et/ou oxydiques (4, 5) du système multicouche optique (3), la couche métallique (6) et/ou la couche intermédiaire (2) sont des couches de pulvérisation, des couches de CVD ou de PECVD ou des couches produites par évaporation, la couche intermédiaire (2) et/ou le système multicouche optique (3) étant notamment constitués de couches appliquées en succession sous vide dans un procédé continu.

14. Matériau composite (V) selon l'une quelconque des revendications 1 à 13, **caractérisé en ce que** la couche supérieure (4) du système multicouche optique (3) présente une épaisseur (D4) d'au maximum 500 nm, cette épaisseur (D4) se situant notamment dans la plage allant de 60 nm à 250 nm, de préférence dans la plage allant de 100 nm à 150 nm.

15. Matériau composite (V) selon l'une quelconque des revendications 1 à 14, de préférence selon la revendication 11 ou 12, **caractérisé en ce que** des couches (2, 4, 5) du système multicouche optiquement actif (3), de préférence au moins la couche absorbant la lumière (5), est/sont configurée(s) en tant que couche(s) à gradient, dans laquelle/lesquelles notamment au moins un des indices q, v, w, x, y ou z et/ou la proportion, de préférence indiquée en pourcentage atomique, d'un élément non indexé contenu dans la couche respective (2, 4, 5) varie(nt) en continu.

FIG. 1

FIG. 2

EP 3 743 661 B1

FIG. 3

FIG. 4

FIG. 5

FIG. 6

FIG. 7

EP 3 743 661 B1

ε(30°C) < 25%

λ = 4μm

λ = 10μm

Kehrwert d. Wellenlänge, cm-1, λ

FIG. 8

FIG. 9

EP 3 743 661 B1

FIG. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2336811 B1
- EP 1217394 A1
- WO 2012069718 A1
- US 9671137 B2
- WO 2013105032 A1